# EUROPÄISCHE PATENTSCHRIFT

(11) **EP 3 525 967 B1**
(45) Veröffentlichungstag und Bekanntmachung des Hinweises auf die Patenterteilung: **12.02.2020**
(21) Anmeldenummer: 17771367.4
(22) Anmeldetag: 11.09.2017
(51) Int. Cl.: B23B 3/00, B23Q 7/04, B23Q 7/10

(54) **VERFAHREN ZUR BEARBEITUNG VON WERKSTÜCKEN IN EINER WERKZEUGMASCHINE SOWIE EINE WERKZEUGMASCHINE HIERFÜR**
METHOD FOR MACHINING WORKPIECES IN A MACHINE TOOL, AND MACHINE TOOL THEREFOR
PROCÉDÉ D'USINAGE DE PIÈCES DANS UNE MACHINE-OUTIL ET MACHINE-OUTIL APPROPRIÉE

(30) Priorität: 20.12.2016 DE 102016125002
(43) Veröffentlichungstag der Anmeldung: 21.08.2019
(73) Patentinhaber: Ezu-Metallwaren GmbH & Co. KG, 78598 Königsheim (DE)
(72) Erfinder: ZUMKELLER, Andreas, 78647 Trossingen (DE)
(74) Vertreter: Kuhnen & Wacker Patent- und Rechtsanwaltsbüro PartG mbB
(86) Internationale Anmeldenummer: PCT/EP2017/072782
(87) Internationale Veröffentlichungsnummer: WO 2018/114066

(56) Entgegenhaltungen:
- DE-A1-102014 106 572
- US-A1- 2004 172 799

## Beschreibung

### Gebiet der Erfindung

Die Erfindung betrifft ein Verfahren zur Bearbeitung von Werkstücken in einer Werkzeugmaschine sowie eine Werkzeugmaschine, mit welcher ein derartiges Verfahren ausgeführt werden kann.

Heutzutage zur Großserienfertigung von Drehteilen und dergleichen eingesetzte Werkzeugmaschinen bestehen in der Regel aus modularen Baugruppen wie beispielsweise dem Antrieb, der Steuerung, Führungen, die das Werkzeug auf bestimmten Bewegungsbahnen führen, sowie Messsystemen und dienen der - zumeist automatisierten - Fertigung von Werkstücken in einer vorgegebenen Form anhand einer definierten relativen Bewegung zwischen Werkstück und Werkzeug.

Dabei unterliegt die Fertigung von Werkstücken stetig wachsenden Anforderungen im Hinblick auf die Qualität der Werkstücke, den Fertigungspreis und damit verbunden der zeitlichen Optimierung des Bearbeitungsprozesses. Zusätzlich wird eine hohe Flexibilität des Bearbeitungszentrums erwartet, um möglichst viele Bearbeitungsprozesse durchführen zu können.

Die den Bearbeitungsprozess bestimmenden Zeitkomponenten lassen sich dabei grundsätzlich in zwei Gruppen unterteilen: die Hauptzeit und die Nebenzeit. Die Hauptzeit gibt dabei diejenige Zeit an, in der ein unmittelbarer Fortschritt erzielt wird, d.h., das Werkzeug zur Bearbeitung in Eingriff steht und das Werkstück, beispielsweise spanabhebend, bearbeitet werden kann. Im Gegensatz dazu kennzeichnet die Nebenzeit die Hilfszeit, die für Nebentätigkeiten, die nur mittelbar zum Erfüllen der Arbeitsaufgabe dienen, benötigt wird.

Maßgeblich wird die Nebenzeit durch Nebentätigkeiten wie das Einfahren und Ausfahren von Werkstücken in den Arbeitsraum, das Wechseln von Werkzeugen sowie das Spannen und Arretieren derselben in einer dafür vorgesehenen Halterung bestimmt.

Aus der oben beschriebenen Hauptzeit und Nebenzeit ergibt sich die Gesamtzeit des Bearbeitungsprozesses zur Herstellung der Werkstücke. Bei bestehenden Werkzeugmaschinen wird dabei für Nebentätigkeiten häufig ein ebenso großer Zeitanteil wie für die eigentliche Bearbeitung des Werkstücks aufgebracht, obwohl die Nebentätigkeiten nur mittelbar am Wertschöpfungsprozess beteiligt sind. Daher bietet eine Reduktion der Nebenzeit ein großes Potential, um die Gesamtzeit des Bearbeitungsprozesses zu minimieren ohne dabei die Hauptzeit zu verkürzen und letztlich an Qualität zu verlieren.

Bei herkömmlich bekannten Werkzeugmaschinen werden Nebentätigkeiten, wie das Einfahren und Ausfahren der Werkstücke, häufig durch Greifereinheiten oder Robotereinheiten übernommen. Diese Einheiten sind außerhalb des Arbeitsraums des Bearbeitungszentrums angeordnet und müssen daher für jeden durchzuführenden Werkstückwechsel in den Arbeitsraum eingefahren werden. Aus diesen Fahrtwegen resultieren lange Einfahr- und Ausfahrzeiten, was wiederum zu hohen Nebenzeiten führt.

Eine Möglichkeit, die Nebenzeit und somit die Gesamtzeit des Bearbeitungsprozesses zu reduzieren, ist somit die Reduktion der benötigten Fahrwege.

### Stand der Technik

Der Stand der Technik offenbart hierzu beispielsweise in der DE 20 2010 051 866 B4 eine Werkzeugmaschine, bei der die Werkstücke durch eine Spindel von einer Transporteinheit abgeholt werden. Genauer gesagt sind hier zur Verringerung der Nebenzeit zwei sogenannte Pick-up-Spindeln seitlich des Werkzeugrevolvers vorgesehen, wobei eine Pick-up-Spindel ein Werkstück aufnimmt und vorhält, während ein in der anderen Pick-up-Spindel gehaltenes Werkstück bearbeitet wird. Die Zeit für den Werkstückwechsel soll hier durch ein redundantes Vorsehen einer zweiten Pick-up-Spindel verkürzt werden. Dadurch, dass die Pick-up-Spindeln seitlich des Werkzeugrevolvers angeordnet sind, ist jedoch der Winkel zwischen Werkstück und Werkzeug fest vorgegeben, wodurch Flexibilität bei der Bearbeitung verloren geht. Da zudem der Werkzeugrevolver zwischen den Pick-up-Spindeln angeordnet ist, stehen für die Bearbeitung zunächst nur die bereits im Werkzeugrevolver bereitgehaltenen Werkzeuge zur Verfügung.

Sollen jedoch mehrere verschiedene Bearbeitungsprozesse unmittelbar aufeinanderfolgend durchgeführt werden, die mithin ein mehrfaches Austauschen von Werkzeugen erfordern, ergibt sich hier das Problem, dass der Werkzeugrevolver zwischen den Pick-up-Spindeln nur schwer erreichbar ist, und etwa die gesamte Baugruppe aus Pick-up-Spindeln und Werkzeugrevolver ausgebaut werden muss, um Werkzeuge im Revolver auszutauschen. Zudem lassen sich hier Werkstücke nur auf der Seite bearbeiten, die nicht durch die Pick-up-Spindel blockiert ist, die das Werkstück hält. Wenn die andere Seite des Werkstücks bearbeitet werden soll, muss dieses somit zwangsweise erst aus dem Bearbeitungsprozess ausgefahren werden, um dann erneut in den Bearbeitungsprozess eingebracht zu werden. Dies alles führt zu einer deutlichen Erhöhung der Nebenzeiten.

In der DE 10 2011 081 717 B4 ist eine Ladeeinheit zum Bestücken einer Werkstückspindel offenbart. Die Ladeeinheit ist auf einer horizontalen Linie verfahrbar und weist einen doppelseitigen Werkstückgreifer auf, der um seine vertikale Achse drehbar ist. Durch das Drehen des Werkstückgreifers kann ein bearbeitetes Werkstück aus der Spindel genommen und ein neues Werkstück, welches von dem Werkstückgreifer gehalten wird, durch eine 180°-Drehung des Werkstückgreifers in die Spindel übergeben werden. Zusätzlich sind an der Werkzeugmaschine jeweils zwei Spindeln und jeweils zwei Werkzeugrevolver vorgesehen.

Um eine Verringerung des Verfahrweges zu erreichen, wird das Werkstück durch den Werkstückgreifer direkt von einer Spindel an die zweite Spindel übergeben. Dabei wird auch hier die zeitliche Verkürzung der Bearbeitungszeit durch ein redundantes Vorsehen von Spindel und Werkzeugrevolver erreicht. Da beide Einheiten jeweils doppelt vorgesehen sind, ergibt sich auch hier ein Platzmangel für das Bereithalten weiterer Werkzeuge. Die Flexibilität der Werkzeugmaschine ist daher stark begrenzt.

Weitere Vorrichtungen und Verfahren zum Bearbeitung von Werkstücken sind zudem aus der US 2004/172799 A1 sowie der DE 10 2014 106572 A1 bekannt. Die DE 10 2014 106572 A1, die den nächstliegender Stand der Technik bildet, offenbart
- ein Verfahren zur Bearbeitung von Werkstücken in einer Werkzeugmaschine mit einer angebrachten Aufnahme, wobei die Werkzeugmaschine ferner aufweist: ein Fördermagazin, in dem eine Mehrzahl von Adaptern aufgenommen ist, einen Werkstückspeicher, in dem eine Mehrzahl von Werkstücken aufgenommen ist, sowie einen Bearbeitungstisch zur Aufnahme von Werkstücken, wobei das Verfahren aufweist: Führen der Adapter in dem Fördermagazin entlang einer vorbestimmten Bahn, Zuführen von in dem Werkstückspeicher bevorrateten Werkstücken zu je einem Adapter und Zusammenfügen je eines Werkstücks mit je einem Adapter derart, dass das Werkstück von dem Adapter gehalten wird in einer Positioniereinrichtung, Übergeben des Adapters mit dem von diesem gehaltenen Werkstück aus der Positioniereinrichtung an den Werkstücktisch derart, dass der Adapter mit dem von diesem gehaltenen Werkstück von dem Werkstücktisch gehalten wird, Bearbeiten des in dem Werkstücktisch befindlichen Werkstücks, Übergeben des Werkstücks zur weiteren Bearbeitung an eine nachgelagerte Station
   und
- eine Werkzeugmaschine zur Bearbeitung von Werkstücken, aufweisend:eine motorisch betriebene Spindel mit einer daran angebrachten Aufnahme, ein Fördermagazin, in dem eine Mehrzahl von Adaptern aufnehmbar ist, und in dem die Adapter entlang einer vorbestimmten Bahn führbar sind, einen Werkstückspeicher, in dem eine Mehrzahl von Werkstücken aufnehmbar ist, eine Fügestation, an welcher je ein Werkstück aus dem Werkstückspeicher mit je einem in dem Fördermagazin aufgenommenen Adapter zusammengefügt wird, so dass das Werkstück von dem Adapter gehalten wird, und einen Bearbeitungstisch mit Werkstückhalteelementen zur Aufnahme von Werkstücken, wobei die Spindel zur Bearbeitung eines Werkstücks rotatorisch und translatorisch bewegbar ist und derart gegen den Bearbeitungstisch verfahrbar ist, dass das Werkstück bearbeitbar ist, und wobei die Spindel derart ausgestaltet ist, dass diese gehaltene Werkzeuge, direkt oder mittels Werkzeugadaptern, aufnehmen kann, um das Werkstück zu bearbeiten.

Wie aus dem Stand der Technik ersichtlich wird, wird bei der Optimierung der Prozesszeiten häufig der Schwerpunkt auf die Zuführzeit von Werkstücken oder auf die Wechselzeiten von Werkzeugen gelegt. Je nach Art der durchzuführenden Bearbeitung, etwa Drehen oder Fräsen, muss hier bisher ein Kompromiss geschlossen, und sich für eine Verkürzung der Werkzeugwechselzeit oder Zuführzeit von Werkstücken entschieden werden. Immer geht bisher jedoch eine Verkürzung der Nebenzeit einher mit einer Verringerung der Flexibilität der Werkzeugmaschinen und damit einer Verringerung von unterschiedlichen, in der Werkzeugmaschine durchführbaren Bearbeitungsprozessen.

Ausgehend vom Stand der Technik liegt der Erfindung daher die Aufgabe zugrunde, eine Technologie anzubieten, bei welcher die Nebenzeit der Werkstückbearbeitung verkürzt und gleichzeitig eine hohe Flexibilität an Bearbeitungsverfahren erreicht werden kann.

### Kurzfassung der Erfindung

Diese Aufgabe wird durch ein Verfahren zur, vorzugsweise spanabhebenden, Bearbeitung von Werkstücken in einer Werkzeugmaschine mit den Merkmalen des Anspruchs 1 gelöst.

Das erfindungsgemäße Verfahren zur, vorzugsweise spanabhebenden, Bearbeitung von Werkstücken in einer Werkzeugmaschine mit einer motorisch betriebenen Spindel mit einer daran angebrachten Aufnahme, wobei die Werkzeugmaschine ferner ein Fördermagazin, in dem eine Mehrzahl von Adaptern aufgenommen ist, einen Werkstückspeicher, in dem eine Mehrzahl von Werkstücken aufgenommen ist, sowie einen Bearbeitungstisch zur Aufnahme von Werkzeugen und/oder Werkstücken, aufweist, weist dabei auf: ein Führen der Adapter in dem Fördermagazin entlang einer vorbestimmten Bahn, ein Zuführen von in dem Werkstückspeicher bevorrateten Werkstücken zu je einem Adapter und Zusammenfügen je eines Werkstücks mit je einem Adapter derart, dass das Werkstück von dem Adapter gehalten wird, ein Weiterfördern des Adapters mit dem von diesem gehaltenen Werkstück in dem Fördermagazin entlang der vorbestimmten Bahn, ein Übergeben des Adapters mit dem von diesem gehaltenen Werkstück aus dem Fördermagazin an die Spindel derart, dass der Adapter mit dem von diesem gehaltenen Werkstück von der Spindel gehalten wird, ein Bearbeiten des in der Spindel befindlichen Werkstücks, vorzugsweise durch ein Verfahren und Rotieren der Spindel gegen ein in einem Werkzeughalteelement auf dem Bearbeitungstisch gehaltenes Werkzeug, ein Freigeben des Werkstücks nach der Bearbeitung durch das auf dem Bearbeitungstisch gehaltene Werkzeug aus dem Adapter und Ablegen des Werkstücks in ein Werkstückhalteelement auf dem Bearbeitungstisch oder Übergeben des Werkstücks zur weiteren Bearbeitung an eine nachgelagerte Station, ein Übergeben des leeren Adapters von der Spindel zurück in das Fördermagazin, und ein Weiterfördern des leeren Adapters in dem Fördermagazin entlang der vorbestimmten Bahn.

Bei dem erfindungsgemäßen Verfahren werden Werkstücke zeitlich vor ihrer Bearbeitung jeweils in einem Adapter aufgenommen. Dabei nimmt jeweils ein Adapter ein Werkstück auf, so dass anschließend Werkstück und Adapter fest verbunden sind. Das Werkstück ist, nachdem es in dem Adapter aufgenommen worden ist, in seiner Lage relativ zu dem Adapter bestimmt. Die Verbindung zwischen Werkstück und Adapter beschränkt sowohl die translatorischen als auch die rotatorischen Freiheitsgrade des Werkstücks in Bezug zu dem Adapter.

Sobald das Werkstück in dem Adapter gehalten wird, vereinfacht sich die Handhabung des Werkstücks. Eine Handhabung des Werkstücks kann nach dem Verbinden über den Adapter geschehen. Das Werkstück selbst muss nicht mehr gespannt werden. Die Handhabung des Werkstücks erfolgt somit indirekt über den Adapter. Durch diese indirekte Handhabung des Werkstücks kann selbiges nun einfach und vor allem schnell in seiner Lage verändert und verfahren werden. Die Vereinfachung der Handhabungsvorgänge führt somit zu einer Reduktion der Nebenzeit.

Das Zuführen eines Werkstücks zu einem Adapter erfolgt zeitlich vor der Bearbeitung des Werkstücks in der Werkzeugmaschine. Damit ist das Zusammenfügen von Werkstück und Adapter von sowohl der Nebenzeit als auch der Hauptzeit der Werkstückbearbeitung entkoppelt. Dieser kritische Prozess der Werkstückhandhabung kann somit zeitlich weitgehend unabhängig von nachgelagerten Schritten erfolgen. Da das Werkstück empfindliche Geometrien oder Oberflächen aufweisen kann, müssen Handhabungsprozesse des Werkstücks mit besonderer Sorgfalt erfolgen. Zeitlich kritische Prozesse, wie eine Handhabung des Werkstücks während Haupt- oder Nebenzeiten, stehen damit im Widerspruch zu einer schonenden Handhabung des Werkstücks.

Durch das zeitliche Entkoppeln der Handhabung des Werkstücks von Haupt- und Nebenzeiten der Werkstückbearbeitung kann somit die anfängliche Beschaffenheit des Werkstücks, beispielsweise die Oberflächengüte an schon bearbeiteten Bereichen des Werkstücks, erhalten bleiben. Die Qualität des Werkstücks bleibt trotz einer Verringerung der Nebenzeiten gesichert.

Da das Fördern im Fördermagazin entlang einer vorbestimmten Bahn erfolgt, liegen nach der Übergabe des Werkstücks in dem Adapter zu jeder Zeit die genauen Orts- und Lageinformationen über das Werkstück vor. Übergabevorgänge müssen nicht mehr aufwendig geregelt werden, wie in einem Fall, in dem ein Werkstück in seiner Lage unbestimmt gelagert ist und aufgenommen werden soll, sondern können durch genaue vorherbestimmte Koordinaten gesteuert erfolgen.

Das Werkstück wird über den Adapter in der motorisch angetriebenen Spindel der Werkzeugmaschine aufgenommen, die bei herkömmlichen Werkzeugmaschinen das Werkzeug hält. Durch ein Verfahren der Spindel gegen ein auf dem Bearbeitungstisch feststehend gehaltenes Werkzeug kann das in der Spindel rotierend angetriebene Werkstück nun spanabhebend bearbeitet werden. Hierbei kann das Werkstück nach einer ersten Bearbeitung anschließend aus der Werkzeugmaschine in eine hierfür vorgesehene Aufnahmevorrichtung ausgegeben werden. Alternativ kann das Werkstück aber auch zu einer weiteren Bearbeitung auf dem Bearbeitungstisch der Werkzeugmaschine abgelegt werden.

Der Bearbeitungstisch weist hierfür verschiedene Halte- und Spannvorrichtungen auf, so dass auf dem Bearbeitungstisch neben Werkzeugen auch Werkstücke während der Bearbeitung gehalten werden können. Durch ein Übergeben des Werkstücks aus der Spindel auf den Bearbeitungstisch werden andere Oberflächen des Werkstücks, genauer die von dem Adapter zuvor umfassten Oberflächen des Werkstücks, zur Bearbeitung frei. Indem das Werkstück nach der ersten Bearbeitung aus der Spindel auf den Bearbeitungstisch abgelegt wird, ist es damit unmittelbar möglich, weitere Bearbeitungen auszuführen, ohne das Werkstück aus dem Bearbeitungsprozess auszufahren, neu auszurichten und dann erneut in den Bearbeitungsprozess einzubringen. Die Flexibilität der Bearbeitungsprozesse wird somit spürbar erhöht und zeitgleich die notwendige Bearbeitungszeit vom Rohling bis zum letztlich fertigen Werkstück signifikant verringert.

Im Ergebnis führt ein Zuführen der Werkstücke in den Arbeitsraum durch das Fördermagazin sowie die Entkopplung der Handhabung des Werkstücks selbst durch das Verbinden mit einem Adapter zu einer Verkürzung der Nebenzeit ohne die Flexibilität des Werkzeugmaschine zu verringern.

Gemäß einer Ausführungsform des erfindungsgemäßen Verfahrens kann das Werkstückhalteelement und das Werkzeughalteelement rotationsfähig auf dem Bearbeitungstisch ausgebildet sein, und das Verfahren kann ferner ein Rotieren des in dem Werkstückhalteelement gehaltenen Werkstücks oder des in dem Werkzeughalteelement gehaltenen Werkzeugs zeitgleich zu oder anstelle der Rotation der Spindel zur Bearbeitung des Werkstücks aufweisen.

Bei dem erfindungsgemäßen Verfahren kann neben dem in der Spindel gehaltenen Werkstück auch das auf dem Bearbeitungstisch gehaltene Werkzeug rotieren. Somit ist es vorteilhaft möglich, das Werkstück drehfest in der Spindel zu halten und so gegen das rotierende Werkzeug auf dem Bearbeitungstisch zu fahren, um das Werkstück beispielsweise drehend oder fräsend zu bearbeiten. Es ist jedoch vorteilhaft auch möglich, nicht nur das Werkzeug auf dem Bearbeitungstisch drehend anzutreiben sondern parallel das in der Spindel gehaltene Werkstück durch die Spindel zu rotieren. Dadurch erhöht sich die Anzahl möglicher Bearbeitungsprozesse erheblich. Insbesondere können Werkstück und Werkzeug zeitgleich in zueinander gleichgerichteter Richtung rotieren, wodurch sich die Relativgeschwindigkeit zwischen Werkstück und Werkzeug verringert. Es sind aber auch entgegengesetzte Rotationsbewegungen möglich, wodurch die Relativgeschwindigkeit zwischen Werkstück und Werkzeug erhöht werden kann.

Damit kann die Geschwindigkeit der Bearbeitung selbst, also die Hauptzeit, verkürzt werden, da etwa mehr Material pro Zeiteinheit abgetragen werden kann. Zudem kann die Rotation des Werkzeugs oder Werkstücks auch nach einer Rotation des jeweils anderen Elements erfolgen. Dadurch kann wiederum die Geschwindigkeit zwischen den einzelnen Bearbeitungsschritten, also die Nebenzeit, verkürzt werden, da ein Umspannen, Positionieren und Ausrichten hinfällig wird. Das Werkstück kann in einer Aufspannung beispielsweise drehend sowie fräsend bearbeitet werden.

Gemäß einer weiteren Ausführungsform des Verfahrens kann die Spindel derart ausgestaltet sein, dass diese anstelle des Adapters mit dem darin gehaltenen Werkstück auch das Werkzeug, direkt oder über einen Werkzeugadapter, aufnehmen kann, und die Werkzeugmaschine ein zweites Magazin aufweist, in dem Werkzeuge, direkt oder in Werkzeugadaptern aufgenommen sind, wobei nach dem Schritt des Freigebens des Werkstücks aus dem Adapter und dem Ablegen des Werkstücks in dem Werkstückhalteelement auf dem Bearbeitungstisch das Werkstück von dem Werkstückhalteelement auf dem Bearbeitungstisch gehalten wird, und die Spindel zurück zum Fördermagazin verfahren wird, um den leeren Adapter aus der Spindel in das Fördermagazin zu übergeben, und dann ein Werkzeug aus dem zweiten Magazin oder aus dem Werkzeughalteelement auf dem Bearbeitungstisch, direkt oder vermittels des Werkzeugadapters, in der Spindel aufzunehmen.

Das Verfahren zur Bearbeitung von Werkstücken kann dabei weiter ein Verfahren der Spindel mit dem darin gehaltenen Werkzeug in Richtung zum Bearbeitungstisch zum Weiterbearbeiten des in dem Werkstückhalteelement auf dem Bearbeitungstisch gehaltenen Werkstücks durch das Werkzeug, ein Ablegen des von der Spindel, direkt oder über den Werkzeugadapter, gehaltenen Werkzeugs aus der Spindel nach der Weiterbearbeitung des Werkstücks zurück in das zweite Magazin oder in das Werkzeughalteelement auf dem Bearbeitungstisch, und ein Ausgeben des auf dem Bearbeitungstisch gehaltenen Werkstücks nach einem Lösen des Werkstücks aus dem Werkstückhalteelement an eine nachgelagerte Station aufweisen.

Da das Werkstück über den Adapter in der Spindel der Werkzeugmaschine gehalten wird, ist die Gestaltung der Aufnahme der Spindel unabhängig von der Werkstückgeometrie. Es ist somit nicht notwendig, eine komplexe Spindel vorzusehen. Vielmehr kann die Spindel auf einfache Weise derart ausgestaltet sein, dass sie neben dem Adapter auch Werkzeuge oder Werkzeugadapter aufnehmen kann, dies lässt sich dabei vorzugsweise durch eine entsprechende Anpassung des Adapters soweit vereinfachen, dass das erfindungsgemäße Verfahren bereits mittels einer herkömmlich in Werkzeugmaschinen enthaltenen Spindel ausgeführt werden kann.

Durch diese Gestaltung entfallen Umrüstvorgänge, wodurch die Nebenzeit gering und gleichzeitig die Flexibilität hoch gehalten werden können. Durch ein zusätzliches Bereithalten von Werkzeugen nicht nur auf dem Bearbeitungstisch sondern auch in einem zweiten Magazin, kann die Anzahl an zur Bearbeitung des Werkstücks zur Verfügung stehenden Werkzeugen erhöht werden. Die Werkzeuge können dabei in einem separat von dem Fördermagazin vorgesehenem zweiten Magazin oder auch zusätzlich im gleichen Magazin, in dem Adapter und Werkstücke bereitgehalten werden, also dem Fördermagazin, vorgehalten werden.

Da das Werkstück sowohl in der Spindel durch Werkzeuge auf dem Bearbeitungstisch bearbeitet werden kann, als auch das Werkstück selbst auf dem Bearbeitungstisch abgelegt werden kann, um dort durch ein nun in der Spindel aufgenommenes Werkzeug bearbeitet zu werden, erhöht sich die Flexibilität der Bearbeitungsprozesse erheblich. Einmal können verschiedene Werkstückseiten durch unterschiedliche Werkstückeinspannungen auf dem Bearbeitungstisch und in der Spindel der Bearbeitung zugänglich gemacht werden. Zudem kann durch ein Verfahren des Werkstücks und Werkzeugs in Abhängigkeit des jeweils rotierenden Elements die Bearbeitung am Werkstück schnell zwischen verschiedenen Rotationsachsen geändert werden.

Da die Werkzeuge und Werkstücke, welche in der Spindel aufgenommen werden können, jeweils auf dem Bearbeitungstisch abgelegt oder von diesem aufgenommen werden können, oder in dem Fördermagazin und dem zweiten Magazin abgelegt oder aufgenommen werden können, lassen sich die Verfahrwege der Spindel nach verschiedenen Kriterien einstellen. Beispielsweise können die Verfahrwege sehr kurz gehalten werden, indem die Spindel etwa ein Werkstück auf dem Bearbeitungstisch ablegt und nach einem geringen Verfahrweg ein Werkzeug von dem Bearbeitungstisch aufnimmt, um das gerade abgelegte Werkstück weiter zu bearbeiten.

Der Verfahrweg kann auch nach dem schnellsten Verfahrweg ausgewählt werden, wenn die Spindel etwa möglichst gerade Strecken ohne Richtungsänderungen zurücklegen soll. Da Werkzeuge sowohl auf dem Bearbeitungstisch als auch in dem zweiten Magazin abgelegt werden können, kann der Verfahrweg der Spindel nach unterschiedlichen Kriterien ausgelegt und entsprechend optimiert werden. Das zweite Magazin kann dabei als Teil des Fördermagazins ausgebildet sein, indem Plätze in dem Fördermagazin je nach Besetzung einem Werkstück oder Werkzeug zugeordnet sind.

Gemäß einer anderen Ausführungsform des Verfahrens kann die Spindel derart ausgestaltet sein, dass diese anstelle des Adapters mit dem darin gehaltenen Werkstück auch das Werkzeug, direkt oder über einen Werkzeugadapter, aufnehmen kann, und wobei die Werkzeugmaschine ein zweites Magazin aufweist, in dem Werkzeuge, direkt oder in Werkzeugadaptern aufgenommen sind, und auf dem Bearbeitungstisch ein Adaptermagazin zum Aufnehmen von Adaptern ausgebildet ist.

Nach dem Schritt des Freigebens des Werkstücks aus dem Adapter und dem Ablegen des Werkstücks in dem Werkstückhalteelement auf dem Bearbeitungstisch wird das Werkstück von dem Werkstückhalteelement auf dem Bearbeitungstisch gehalten, und der Adapter in das Adaptermagazin durch die Spindel auf dem Bearbeitungstisch ablegt wird. Das Verfahren zur Bearbeitung von Werkstücken kann dabei weiter ein Aufnehmen eines Werkzeugs aus dem Werkzeughalteelement auf dem Bearbeitungstisch oder aus dem zweiten Magazin, direkt oder vermittels des Werkzeugadapters, in der Spindel, ein Verfahren der Spindel mit dem darin aufgenommenen Werkzeug in Richtung zu dem auf dem Bearbeitungstisch in dem Werkstückhalteelement gehaltenen Werkstück, um das Werkstück weiter zu bearbeiten, und ein Ablegen des Werkzeugs aus der Spindel zurück in das zweite Magazin oder in das Werkzeughalteelement auf dem Bearbeitungstisch nach der Bearbeitung des Werkstücks aufweisen.

Entsprechend dem vorstehend beschriebenen Aspekt kann bei dieser Ausführungsform die Flexibilität der in der Werkzeugmaschine möglichen Bearbeitungsprozesse weiter erhöht werden. Das Werkstück kann nach einer ersten Bearbeitung auf dem Bearbeitungstisch abgelegt werden. Hierzu wird das Werkstück aus dem Adapter ausgegeben und in dem Werkstückhalteelement auf dem Bearbeitungstisch aufgenommen.

Der in der Spindel verbleibende Adapter kann anschließend durch ein kurzes Verfahren der Spindel in einem Adaptermagazin auf dem Bearbeitungstisch abgelegt werden. Je nach Beschaffenheit und Art des Werkzeugs kann ein Aufnehmen mit oder ohne Adapter möglich sein. Dadurch ist es möglich, die Anzahl an in der Spindel aufnehmbaren Werkzeugen deutlich zu erhöhen, da sowohl mit der Spindelaufnahme kompatible Werkzeuge als auch erst durch den Adapter an der Spindel anbringbare Werkzeuge von der Spindel aufgenommen werden können.

Gemäß einer weiteren Ausführungsform des Verfahrens kann die Spindel nach der Bearbeitung des in dem Werkstückhalteelement gehaltenen Werkstücks und dem Ablegen des Werkzeugs einen Adapter aus dem Adaptermagazin aufnehmen und vermittels diesem das in dem Werkstückhalteelement gehaltene Werkstück erneut in der Spindel aufnehmen, um das Werkstück durch ein erneutes Verfahren und Rotieren der Spindel und/oder Rotieren eines auf dem Bearbeitungstisch in einem Werkzeughalteelement gehaltenen Werkzeugs weiter zu bearbeiten oder das Werkstück in die nachgelagerte Station auszugeben.

Wie oben beschrieben ist, wird durch die breite Variationsmöglichkeit an verschiedenen durchführbaren Bearbeitungsprozessen eine hohe Flexibilität der Werkzeugmaschine erreicht. Mit der hier beschriebenen Weiterbildung wird zudem die Reihenfolge der verschiedenen Bearbeitungsschritte offen gelassen. Da ein Adaptermagazin auf dem Bearbeitungstisch ausgebildet ist, kann die Spindel, ohne ein Verfahren zurück zu dem Fördermagazin, einen Adapter direkt von dem Bearbeitungstisch und nach einem kurzen Verfahren ein Werkstück in dem gerade aufgenommenen Adapter aus einem Werkstückhalteelement entnehmen. Hierdurch werden nicht nur die Verfahrwege stark verkürzt, zusätzlich erreichen die Bearbeitungsverfahren höchste Flexibilität, da nun jede Bearbeitungsreihenfolge möglich ist.

Nach einer Weiterbildung des Verfahrens kann der Bearbeitungstisch während der Bearbeitung des Werkstücks in seiner Lage relativ zu einer Rotationsachse der Spindel verstellt werden.

Gemäß dieser Weiterbildung wird der Freiheitsgrad zwischen dem in der Spindel zur Bearbeitung aufgenommenen Werkstück oder Werkzeug zu dem auf dem Bearbeitungstisch aufgenommenen Werkstück oder Werkzeug erhöht. Durch ein Verändern der Lage des Bearbeitungstisches ist der zwischen Werkstück und Werkzeug eingeschlossene Winkel variabel verstellbar. Wird die Winkellage des Bearbeitungstisches während der Bearbeitung des Werkstücks verändert, können hierdurch weitere Formen, wie etwa runde Profile, gefertigt werden. Die Winkellage des Bearbeitungstisches kann aber auch nach oder vor einem Eingriff des Werkzeugs mit dem Werkstück verändert werden, so dass die mögliche, zu bearbeitende Fläche auf dem Werkstück vergrößert wird.

Gemäß einer weiteren Ausführungsform des Verfahrens können auf dem Bearbeitungstisch mehrere verschiedenartige Werkzeuge zur Bearbeitung des Werkstücks bereitgehalten werden, und das Verfahren kann weiter ein Verfahren der Spindel mit dem durch den Adapter gehaltenen Werkstück nach einer ersten Bearbeitung des Werkstücks durch ein erstes Werkzeug in Richtung zu einem auf dem Bearbeitungstisch durch das Werkzeughalteelement gehaltenen zweiten Werkzeug, ein Weiterbearbeiten des in der Spindel mittels des Adapters gehaltenen Werkstücks durch das auf dem Bearbeitungstisch gehaltene zweite Werkzeug und ein Verfahren der Spindel zu einem weiteren auf dem Bearbeitungstisch gehaltenen Werkzeug zur Weiterbearbeitung des Werkstücks oder zum Ablegen des Werkstücks in dem Werkstückhalteelement auf dem Bearbeitungstisch oder in der nachgelagerten Station, aufweisen.

Nach dieser Weiterbildung ist es möglich an dem Werkstück verschiedene Bearbeitungsschritte durchzuführen, ohne, dass ein Umspannen von Werkstück oder Werkzeug nötig ist. Auf dem Bearbeitungstisch sind mehrere verschiedenartige Werkzeuge, welche jeweils einzeln rotierbar sind, aufgespannt. Das Werkstück kann durch ein einfaches Verfahren der Spindel von einem ersten Werkzeug zu einem zweiten Werkzeug verschiedene Bearbeitungen erfahren. Beispielsweise kann durch ein erstes Werkzeug mit einer geometrisch bestimmten Schneide Material abgetragen und durch ein zweites Werkzeug mit einer geometrisch unbestimmten Schneide die Oberfläche geläppt werden.

Nach einer weiteren Ausführungsform des Verfahrens kann der Bearbeitungstisch mehrere Bereiche aufweisen, auf welchen jeweils verschiedenartige Werkzeuge zur Bearbeitung des Werkstücks gehalten werden können, wobei der Bearbeitungstisch derart veränderbar ist, dass auf einem Bereich auf dem Bearbeitungstisch gehaltene Werkzeuge ausgetauscht werden können und zeitgleich auf einem anderen Bereich in Werkzeughalteelementen gehaltene Werkzeuge oder ein im Werkstückhalteelement gehaltenes Werkstück an der Bearbeitung des Werkstücks beteiligt sein kann.

Das Verfahren zur Bearbeitung von Werkstücken kann weiter ein Bearbeiten des mittels des Adapters in der Spindel gehaltenen Werkstücks durch ein Verfahren und Rotieren der Spindel und/oder durch ein Rotieren des in dem Werkzeughalteelement an einem ersten Bereich des Bearbeitungstischs gehaltenen Werkzeugs, ein Verfahren der Spindel aus einem Stellbereich des Bearbeitungstischs nach einer ersten Bearbeitung des Werkstücks, ein Verstellen des Bearbeitungstischs derart, dass der erste Bereich aus einer Bearbeitungsposition und ein zweiter Bereich in die Bearbeitungsposition verfahren wird, so dass im zweiten Bereich gehaltene Werkzeuge zur Bearbeitung des Werkstücks bereit stehen, ein Verfahren der Spindel hin zu dem Bearbeitungstisch nachdem der Verstellvorgang des Bearbeitungstischs abgeschlossen ist, und ein Weiterbearbeiten des mittels des Adapters in der Spindel gehaltenen Werkstücks durch ein Verfahren und Rotieren der Spindel und/oder durch ein Rotieren des in dem Werkzeughalteelement auf dem zweiten Bereich des Bearbeitungstischs gehaltenen Werkzeugs aufweisen.

Nach dieser Weiterbildung des Verfahrens weist der Bearbeitungstisch verschiedene Bereiche auf, an welchen jeweils Werkzeuge vorgehalten werden können. Der Bearbeitungstisch ist dabei derart verstellbar, dass verschiedene Bereiche des Bearbeitungstischs in die Bearbeitungsposition gebracht werden können. Die Bearbeitungsposition definiert hier den Bereich, in welchem die auf dem Bearbeitungstisch aufgenommenen Werkzeuge und/oder Werkstücke an der Werkstückbearbeitung beteiligt sein können.

Die Werkzeuge, welche an Bereichen aufgenommen sind, die sich gerade nicht in der Bearbeitungsposition befinden, können währenddessen gegen andere oder gleichartige Werkzeuge ausgetauscht werden. Hierdurch lässt sich die Flexibilität der möglichen Bearbeitungsprozesse der Werkzeugmaschine weiter erhöhen, da durch ein Verstellen des Bearbeitungstischs weitere Werkzeuge zur Bearbeitung verfügbar gemacht werden können. Zudem können die an einem aus der Bearbeitungsposition verfahrenen Bereich gehaltenen Werkzeuge gegen weitere, von außerhalb der Werkzeugmaschine zugeführte Werkzeuge getauscht werden.

Dabei kann dieser Austauschvorgang der Werkzeuge hauptzeitparallel erfolgen, wodurch ein Unterbrechen des Fertigungsprozesses für den Austausch der Werkzeuge vermieden und somit die Nebenzeit deutlich verkürzt werden kann. Die Bearbeitungszeit wird damit nicht auf Kosten der Flexibilität erhöht, sondern kann bei hoher Flexibilität gering gehalten werden.

Nach einer Weiterbildung des Verfahrens kann die Werkzeugmaschine ferner eine Messeinrichtung und eine Steuereinrichtung aufweisen, und die Spindel kann während der Bearbeitung des Werkstücks in einen Erfassungsbereich der Messeinrichtung verfahren werden, das in der Spindel durch den Adapter gehaltene Werkstück kann in seiner Geometrie vermessen werden, und die erfassten Messdaten können zu der Steuereinrichtung übertragen werden.

Nach dieser Weiterbildung kann das in der Spindel gehaltene Werkstück ohne ein Ausgeben aus der Werkzeugmaschine direkt in der Spindel in seiner Geometrie vermessen werden. Hierzu verfährt die Spindel entsprechend in einem Erfassungsbereich der Messeinrichtung. Dies ermöglicht beispielsweise eine hauptzeitparallele Nachregelung der Bearbeitungsvorgänge. Zudem können mangelhafte Werkstücke durch das Vermessen erkannt, ausgesondert und die Messdaten für nachfolgende Bearbeitungsprozesse verwendet werden. Durch diesen Vorgang kann die Ausschussrate verringert und die Qualität der gefertigten Werkstücke verbessert werden. Insgesamt kann durch eine geringe Ausschussrate die nötige Bearbeitungszeit pro Losgröße verringert werden.

Ein weiterer Aspekt der Erfindung stellt gemäß Anspruch 9 eine Werkzeugmaschine zur, vorzugsweise spanabhebenden, Bearbeitung von Werkstücken dar, deren vorteilhafte Ausgestaltung Gegenstand der Unteransprüche ist. Mit der erfindungsgemäßen Werkzeugmaschine ist es dabei möglich, die oben beschriebenen vorteilhaften Effekte zu erreichen.

### Kurze Beschreibung der Zeichnung

Die Merkmale und Vorteile sowie die technische und wirtschaftliche Bedeutung einer beispielhaften Ausführungsform der vorliegenden Erfindung werden nachfolgend Bezug nehmend auf die beigefügte Zeichnung beschrieben, hierbei zeigt:

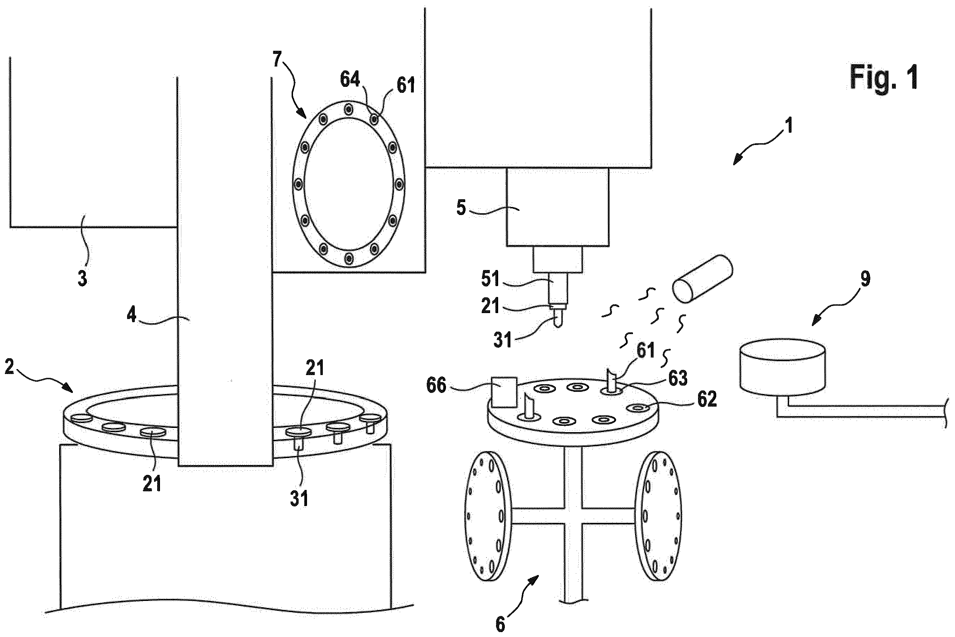

- Fig. 1: eine Ansicht, welche eine schematische Konfiguration einer Werkzeugmaschine darstellt.

### Detaillierte Beschreibung der Ausführungsform

Nachfolgend wird eine Ausführungsform der Erfindung im Detail mit Bezug auf die beigefügte Zeichnung beschrieben.

Fig. 1 zeigt eine schematische Konfiguration einer Werkzeugmaschine 1 gemäß einer Ausführungsform der Erfindung. Die Werkzeugmaschine 1 weist eine motorisch betriebene Spindel 5 auf. In dieser Spindel 5 können erfindungsgemäß sowohl Werkstücke 31 als auch Werkzeuge 61 zur Bearbeitung aufgenommen werden. Zur Bearbeitung kann die Spindel 5 das jeweils aufgenommene Werkstück 31 oder Werkzeug 61 mit einer kontinuierlich veränderbaren Drehzahl antreiben.

Je nach Art der Bearbeitung kann die Spindel 5 das Werkstück 31 oder Werkzeug 61 auch feststehend, d.h. nicht rotierend, halten, etwa wenn das in der Spindel 5 gehaltene Werkstück 31 durch ein rotierendes Werkzeug 61 bearbeitet wird. Die Spindel 5 kann durch verschiedene an der Werkzeugmaschine 1 ausgebildete Schlitten in X-, Y-, sowie Z-Richtung verfahren werden.

Neben der Spindel 5 weist die Werkzeugmaschine 1 einen Bearbeitungstisch 6 auf. Auf diesem sind Spannelemente angeordnet, die beispielsweise als Spannfutter ausgebildet sein können und mittels eines Spannfutterantriebs automatisiert betätigbar sind. Die Spannelemente sind dabei jeweils als Werkstückhalteelement 62 zur Werkstückaufnahme oder als Werkzeughalteelement 63 zur Werkzeugaufnahme ausgebildet.

Diese Spannelemente 62, 63 zur Werkstückaufnahme oder Werkzeugaufnahme sind dabei zumindest teilweise durch einen separat an der Werkzeugmaschine 1 angebrachten Antrieb um ihre Längsachse drehbar. Zudem können Werkstückhalteelemente 62 und/oder Werkzeughalteelemente 63 vorgesehen sein, die nicht drehbar, genauer nicht drehbar relativ zum Bearbeitungstisch 6, an diesem angebracht sind.

Die Werkstückhalteelemente 62 und Werkzeughalteelemente 63 können durch ein Verfahren des gesamten Bearbeitungstischs 6 zudem translatorisch bewegt werden. Hierzu weist der Bearbeitungstisch 6 Schlitten auf, auf welchen der Bearbeitungstisch 6 in X- und Y-Richtung, auf einer Ebene parallel zur Bodenebene, auf welcher die Werkzeugmaschine steht, verfahrbar ist. Zusätzlich kann der Bearbeitungstisch 6 aber auch in Z-Richtung, d.h., senkrecht zur Bodenebene, verfahrbar sein. Um die Werkstückbearbeitungsmöglichkeiten noch zu erhöhen, ist der Bearbeitungstisch 6 zudem um die X- und/oder Y-Richtung drehbar ausgebildet. Beispielsweise ist der Bearbeitungstisch 6 als Schwenktisch gelagert, wobei die Tischebene beispielsweise durch ein Kugelgelenk mit einem darunter ausgebildeten Tischgestell verbunden ist.

Die Werkzeugmaschine 1 weist ferner ein Fördermagazin 2 auf, das als Kettenmagazin, Tellermagazin oder Ringmagazin ausgebildet sein kann. Dabei weist das Fördermagazin 2 eine bestimmte Anzahl von codierbaren, vorzugsweise beliebig belegbaren Plätzen auf. Das Fördermagazin 2 ist derart ausgestaltet, dass zumindest ein Teil der Plätze des Fördermagazins 2 im Verfahrbereich der Spindel 5 liegt, wenn die Spindel 5 als Pick-up-Spindel ausgebildet ist, um im Fördermagazin vorgehaltene Teile selbstständig anfahren und aufnehmen zu können.

Die Spindel 5 der Werkzeugmaschine 1 wird dabei über den Hauptantrieb angetrieben, der von einer an der Werkzeugmaschine 1 vorgesehenen Steuerung Befehle empfängt. Die Steuerung berechnet, steuert und kontrolliert neben den verschiedenen Bewegungen, wie etwa den Verfahrwegen oder der Rotation der Spindel 5, auch die Bewegungen der weiteren beweglichen Elemente der Werkzeugmaschine 1, wie etwa ein Verfahren des Bearbeitungstischs 6 oder der Werkstück- und Werkzeughalteelemente 62, 63.

Die Steuerung ist hier als numerische Steuerung ausgeführt, kann aber auch durch eine speicherprogrammierbare Steuerung ausgeführt sein. Weiter kann die Werkzeugmaschine 1 ein Bett, Schlitten, Führungen, Bedienelemente, sowie Baugruppen zur Ver- und Entsorgung mit Betriebsmitteln, wie Schmier- oder Schneidöl, Kühlmittel, und dergleichen aufweisen.

Um eine hohe Flexibilität der Werkzeugmaschine 1 zu erreichen, können, wie oben beschrieben ist, Werkstücke 31 sowie Werkzeuge 61 in der Spindel 5 aufgenommen werden. Die Aufnahme von Werkstücken 31 geschieht mittels eines Adapters 21. Dieser Adapter 21 fungiert als Verbindungselement zwischen der Spindel 5 und den jeweiligen Werkstücken 31 und weist Spannmechanismen auf, um an der Spindel 5 befestigt werden zu können.

Je nach Art des Werkzeugs 61 kann auch die Aufnahme des Werkzeugs 61 in der Spindel 5 mittels eines Verbindungselements, beispielsweise eines Werkzeugadapters 64, erfolgen. Die Aufnahme von Werkzeugen 61 kann aber auch - ohne einen derartigen Adapter - direkt in der Spindel 5 erfolgen. Beispielsweise kann die Spindel 5 über eine genormte Werkzeugaufnahme in Form eines Spannsatzes 51, wie etwa einem Hohlschaftkegel (HSK) verfügen, in welchem die Werkzeuge 61 direkt aufgenommen werden können. Neben einem HSK-Spannsatz sind auch weitere Systeme wie ein PSC-Spannsatz (polygonaler Kegel) möglich. Die Spannung von Werkzeugen 61 oder Werkstücken 31, beziehungsweise Adaptern 21, in dem Spannsatz der Spindel 5 erfolgt vorzugsweise automatisch.

Um ein Werkstück 31 oder ein Werkzeug 61 aufnehmen zu können, werden die aufzunehmenden Elemente in dem Fördermagazin 2 in den Eingriffsbereich der Spindel 5 gebracht. Da jeder Platz in dem Fördermagazin 2 individuell, beispielsweise durch den Adapter 21 (mit oder ohne darin gehaltenem Werkstück), den Werkzeugadapter 64 oder ein Werkzeug 61 belegt werden kann, sind die Plätze im Fördermagazin 2 vorzugsweise in einer Reihenfolge belegt, in welcher die Elemente von der Spindel 5 zur Bearbeitung aufgenommen werden sollen.

Hierdurch lassen sich die Verfahrwege der Spindel 5 und des Fördermagazins 2 reduzieren und mögliche Wartezeiten, d.h., Nebenzeiten vermeiden, in welchen beispielsweise ein zur Bearbeitung benötigtes Werkzeug 61 zur Aufnahmeposition aus dem Fördermagazin 2 verfahren wird. Mit anderen Worten kann die Belegung des Fördermagazins 2 an das jeweils auszuführende Bearbeitungsverfahren angepasst werden. Hierdurch lassen sich die Verfahrwege der Spindel 5 sowie des Fördermagazins 2 minimieren. Das Fördermagazin 2 kann aber auch in beiden Richtungen verfahrbar ausgebildet sein. Ist ein Werkstück 31 an einer Position, die unmittelbar nach einer von der Spindel 5 erreichbaren Position liegt, kann die Förderbewegung des Fördermagazins 2 umgekehrt werden.

Das Fördermagazin 2 wird erfindungsgemäß über eine Fügestation 4 mit den Werkstücken 31 beladen, die in einem Werkstückspeicher 3 bevorratet sind. Auch Werkzeuge 61, Werkzeugadapter 64 oder Adapter 21 können über die Fügestation 4 oder alternativ über eine separat vorgesehene Einrichtung in das Fördermagazin 2 eingesetzt werden.

Der Werkstückspeicher 3 kann als eine Werkstückpalette oder als Magazin ausgebildet sein, wobei die Werkstücke 31 beispielsweise durch einen Greifer aus dem Werkstückspeicher entnommen und anschließend in je einen sich bereits im Fördermagazin 2 befindlichen Adapter 21 eingefügt werden können. Alternativ kann ein Wendelföderer vorgesehen sein, der die Werkstücke aus einem Speichersilo aufnimmt, ausrichtet und über einen Stempel oder dergleichen in den Adapter 21 drückt. Alternativ kann jeweils ein Adapter 21 durch einen Greifer aus dem Fördermagazin 2 entnommen, mit je einem Werkstück 31 bestückt, und anschließend wieder in das Fördermagazin 2 eingesetzt werden.

Vor einem Bearbeitungszyklus wird, wie oben beschrieben ist, eine vorbestimmte Anzahl an Adaptern 21 in das Fördermagazin 2, beispielsweise durch einen Greifer oder einen Roboterarm, derart eingefügt, dass je ein Adapter 21 einem Platz im Fördermagazin 2 zugeordnet ist. Die Adapter 21 können dabei bereits vor dem Einsetzen in das Fördermagazin 2 bereits mit Werkstücken 31 bestückt werden, wobei bei einer alternativen Ausführungsform nicht jeder Adapter 21 in dem Fördermagazin 2 ein Werkstück 31 enthalten muss und beispielsweise eine geringe Anzahl an Adaptern 21 ohne Werkstück 31 in dem Fördermagazin 2 gehalten ist, um in einem späteren Bearbeitungsschritt auf dem Bearbeitungstisch 6 abgelegte Werkstücke 21 aufzunehmen und für die weitere Bearbeitung zu halten.

Je nach Art der Bearbeitung können aber auch alle Plätze im Fördermagazin 2 durch Adapter 21 mit darin gehaltenen Werkstücken 31 belegt sein, beispielsweise wenn aufgrund des geplanten Bearbeitungsprozesses nicht vorgesehen ist, Werkstücke 31 durch in der Spindel 5 geführte Werkzeuge 61 zu bearbeiten.

Zur Übergabe eines Werkstücks 31 in einen in dem Fördermagazin 2 aufgenommenen Adapter 21 stoppt das Fördermagazin 2 seine Bewegung oder verlangsamt diese so weit, dass ein Adapter 21 mit einem darin gehaltenen Werkstück 31 in das fahrende Fördermagazin 2 eingesetzt werden kann. Bei einer anderen Ausgestaltung kann das Werkstück 31 auch während der Bewegung des Fördermagazins 2 in den in diesem aufgenommenen Adapter 21 einsetzt werden, wobei hierfür eine separate Steuereinrichtung vorgesehen sein kann, die entsprechende Zuführelemente, beispielsweise Greifer oder Schieber derart steuert, dass diese taktgenau die in den Adaptern 21 aufzunehmenden Werkstücke 31 selbigen zuführen, um ein Verkanten oder dergleichen der Werkstücke 31 an den Adaptern aufgrund einer überschneidenden Bewegung zu vermeiden.

Die Adapter 21 werden in dem Fördermagazin 2 entlang einer vorbestimmten Bahn bewegt. An der Fügestation 4, welche an dem Fördermagazin 2 ausgebildet ist, wird das Werkstück 31 derart in den Adapter 21 eingefügt, dass das Werkstück 31 anschließend in seiner Lage translatorisch sowie rotatorisch gegenüber dem Adapter 21 festgelegt ist. Anschließend wird der Adapter 21, der nun mit dem Werkstück 31 verbunden ist, entlang der vorbestimmten Bahn in dem Fördermagazin 2 weitergeführt.

Jeder Platz in dem Fördermagazin 2 ist dabei derart codierbar, dass feststellbar ist, an welcher Position sich in dem Fördermagazin 2 sich ein entsprechendes Element befindet. Mit anderen Worten kann genau bestimmt werden, welcher Platz des Fördermagazins 2 gerade an der Fügestation 4 oder an der Aufnahmeposition ist und ob ein Werkstück 31 oder ein Werkzeug 61 in einen Fördermagazinplatz eingefügt worden ist. Die Platzcodierung erfolgt beispielsweise temporär, beispielsweise durch einen Barcode oder einen Chip am Werkzeug 61 bzw. Adapter 21 oder ähnlichem, und kann gelöscht werden, wenn das Werkzeug 61 und/oder der Adapter 21 aus dem Platz des Fördermagazins 2 entnommen wird.

Erreicht ein jeweiliger Platz im Fördermagazin 2 einen bestimmten Bereich, im Fall einer Pick-up-Spindel die Aufnahmeposition, kann das an diesem Platz gehaltene Werkstück 31 mittels dem Adapter 21 an die Spindel 5 übergeben, bzw. von dieser aufgenommen werden.

Ist die Spindel 5 wie oben beschrieben als Pick-up-Spindel ausgebildet, kann das Werkstück 31 durch ein Verfahren der Spindel 5 aus dem Fördermagazin 2 entnommen werden. Die in Fig. 1 dargestellte Spindel 5 ist als senkrechte Hauptspindel ausgebildet, ebenso kann aber auch eine waagrechte Hauptspindel verwendet werden. Die Übergabe von dem Fördermagazin 2 in die Spindel 5 kann auch durch einen Greifer, etwa einen doppelarmigen Greifer, erfolgen, wenn die Spindel 5 nicht als Pick-up-Spindel ausgebildet ist.

In dem Fall der Pick-up-Spindel verfährt die Spindel 5 nach der Aufnahme des Werkstücks 3 wieder in Richtung zum Bearbeitungstisch 6. Auf dem Bearbeitungstisch 6 sind mehrere Werkzeuge 61 in oben beschriebenen Werkzeughalteelementen 63 angeordnet. In der hier dargestellten Ausführungsform sind die Werkzeughalteelemente 63 kreisförmig angeordnet. Die Werkzeughalteelemente 63 können aber in jeder anderen Form, beispielsweise in U-Form oder L-Form auf dem Bearbeitungstisch 6 aufgenommen sein.

Wie oben beschrieben ist, sind die Werkzeuge 61 in den Werkzeughalteelementen 63 drehbar bzw. rotierbar aufgenommen und durch ein Verfahren des Bearbeitungstischs 6 translatorisch verschiebbar. Die Werkzeuge 61 können aber auch nur durch ein angetriebenes Spannfutter rotierbar oder durch ein Verfahren des Bearbeitungstisches 6 nur translatorisch bewegbar ausgebildet sein. Zudem können auch nur einzelne Werkzeughalteelemente 63 als motorisch angetriebene Spannfutter ausgebildet sein, während andere als feste Werkzeughalteelemente 63 ausgebildet sind. Der Antrieb der am Bearbeitungstisch 6 ausgebildeten Elemente, genauer dem Werkzeughalteelement 63 und/oder Werkstückhalteelement 62, erfolgt dabei durch zumindest einen separat vorgesehenen Antrieb, etwa einen Motor.

Die auf dem Bearbeitungstisch 6 vorgehaltenen Werkzeuge 61 können unterschiedliche Werkzeuge 61 zur spanabhebenden Bearbeitung sein. So können Werkzeuge 61 mit geometrisch bestimmter Schneide, wie ein Bohrer oder ein Fräßkopf vorgesehen sein. Es können aber auch Werkzeuge 61 mit geometrisch unbestimmter Schneide, wie Schleifwerkzeuge oder Hohnwerkzeuge zur Werkstückbearbeitung bereitgehalten werden.

Zudem können auch Werkzeuge 61 für weitere Fertigungsverfahren wie Schweißen, Fügen, Kleben oder Lackieren beispielsweise durch Klebepistolen oder Lackierpistolen auf dem Bearbeitungstisch 6 bereitgehalten werden. Derlei zusätzliche Werkzeuge 61 können von der Spindel 5 aufgenommen werden, um das Werkstück 31 beispielsweise nach einer spanabhebenden Bearbeitung vermittels der Lackierpistole unmittelbar mit einer Schutzlackierung oder dergleichen zu versehen.

Diese zusätzlichen Werkzeuge 61 werden dabei von der Spindel 5 geführt, die bei dieser Art der Bearbeitung nicht rotiert. Stattdessen kann sich das in dem Werkstückhalteelement 62 auf dem Bearbeitungstisch 6 gehaltene Werkstück 31 langsam drehen, so dass alle Seiten des Werkstücks 31 von dem Werkzeug 61 erreicht werden können. Nach einer solchen Bearbeitung wird das Werkstück 61 wieder auf dem Bearbeitungstisch 6 abgelegt.

Es ist zusätzlich auch denkbar, dass für diese nicht spanabhebenden Werkzeuge 61 spezielle Werkzeughalteelemente 63 auf dem Bearbeitungstisch 6 ausgebildet sind, und dass das bearbeitete Werkstück 31 mittels der Spindel 5 in den Arbeitsbereich dieser Werkzeuge 61 verfahren wird, wo es endbearbeitet werden kann.

Nachdem die Spindel 5 mit dem Werkstück 31 in Richtung des Bearbeitungstischs 6 verfahren wurde, kann ein auf dem Bearbeitungstisch 6 gespanntes Werkzeug 61 das in der Spindel 5 gehaltene Werkstück 31 bearbeiten. Die Drehzahl der Spindel 5 ist dabei variabel je nach Bearbeitung anpassbar. Erfindungsgemäß kann aber auch anstelle einer Rotation der Spindel 5 das auf dem Bearbeitungstisch 6 gehaltene Werkzeug 61 zur Bearbeitung des Werkstücks 31 rotieren.

Beispielsweise kann die Spindel 5 zur Bearbeitung der Oberfläche des Werkstücks 31 durch ein auf dem Bearbeitungstisch 6 gehaltenes Fräswerkzeug rotiert und verfahren werden. Bei einer anschließenden Bearbeitung, bei der beispielsweise ein Gewinde in das Werkstück 31 eingefügt wird, kann ein Gewindebohrer auf dem Bearbeitungstisch 6 rotieren, während die Spindel 5 nur translatorisch auf einer Geraden senkrecht zu dem Bearbeitungstisch 6 verfährt. Durch dieses erfindungsgemäße Verfahren können mehrere unterschiedliche Bearbeitungsschritte mit einer Aufspannung von Werkstück 31 und Werkzeug 61 durchgeführt werden.

Da der Bearbeitungstisch 6, wie oben beschrieben ist, gelenkig gelagert ist, kann der Winkel zwischen Rotationsachse der Spindel 5 und Tischebene verändert werden. Somit kann das Werkzeug 61 das Werkstück 31 in verschiedenen Eingriffswinkeln bearbeiten. Beispielsweise können so einfach kugelförmige Bereiche auf dem Werkstück 31 bearbeitet, beziehungsweise geformt werden, indem sich der Bearbeitungstisch 6 langsam kippt, während das Werkzeug 61 das in der Spindel 5 rotierende Werkstück 31 bearbeitet.

Nach der Bearbeitung kann das Werkstück 31 durch ein Verfahren der Spindel 5 zu einer nachgelagerten Station 9 ausgegeben werden. Dabei kann die nachgelagerte Station 9 ein Auffangbehälter sein, in welchen die Werkstücke 31 aus der Spindel 5 ausgeworfen werden, um dort gesammelt zu werden. Alternativ kann die Spindel 5 das Werkstück 31 in einer Werkstückpalette an vorbestimmten Plätzen oder auf einem Förderband ablegen.

Nach dieser weiteren Bearbeitung kann das Werkstück 31 ausgeworfen werden oder für eine nächste Bearbeitung in der Werkzeugmaschine 1 verbleiben. Um alle Seiten des Werkstücks 31 bearbeiten zu können, kann das Werkstück 31 umgespannt werden. Hierfür verfährt die Spindel 5 mit dem Werkstück 31 in Richtung des Bearbeitungstischs 6. Durch ein Lösen der Verbindung zwischen Werkstück 31 und Adapter 21 kann das Werkstück 31 in dem Werkstückhalteelement 62 auf dem Bearbeitungstisch 6 abgelegt und von diesem gehalten werden. Hierzu wird nur die Verbindung zwischen Werkstück 31 und Adapter 21 gelöst, während der Adapter 21 noch in der Spindel 5 verbleibt.

Wie oben beschrieben ist, kann das Werkstückhalteelement 62 als Spannfutter mit automatischem Spannmechanismus ausgebildet sein. Ähnlich dem Werkzeughalteelement 63 kann auch das Werkstückhalteelement 62 als ein angetriebenes Spannfutter das hierin gehaltene Werkstück 31 zur Bearbeitung rotieren. Ebenso kann das Werkstückhalteelement 62, und somit das Werkstück 31, durch ein Verfahren des Bearbeitungstischs 6 eine translatorische Bewegung in X-, Y- und Z-Richtung erfahren. Das Werkstückhalteelement 62 kann derart ausgebildet sein, dass die Seiten des Werkstücks 31 zur Bearbeitung frei liegen, an welchen das Werkstück 31 zuvor mittels des Adapters 21 in der Spindel 5 aufgenommen war.

Nach dem Ablegen des Werkstücks 31 auf dem Bearbeitungstisch 6 verfährt die Spindel 5 zu einem auf dem Bearbeitungstisch 6 bereitgehaltenem Werkzeug 61. Dieses Werkzeug 61 kann wie oben beschrieben durch den Werkzeugadapter 64 in der Spindel 5 aufgenommen werden. Der Adapter 21 und der Werkzeugadapter 64 können als ein kombinierter Adapter ausgebildet sein, so dass in einem Adapter sowohl Werkzeuge 61 als auch Werkstücke 31 aufgenommen werden können. In diesem Fall eines kombinierten Adapters muss der Adapter 21 nicht von der Spindel 5 abgelegt werden, sondern kann zur nachfolgenden Aufnahme eines Werkzeugs 61 in der Spindel 5 verbleiben.

Alternativ kann die Spindel 5 nach dem Ablegen des Werkstücks 31 in das Werkstückhalteelement 62 den Adapter 21 in einem Adaptermagazin 66 ablegen. Das Adaptermagazin 66 ist hier ebenso auf dem Bearbeitungstisch 6 ausgebildet. Alternativ kann das Adaptermagazin 66 als separat ausgebildete Einrichtung vorgesehen sein. In dem Adaptermagazin 66 ist eine Reihe von codierbaren Adapterplätzen vorgesehen. Das Adaptermagazin 66 kann aber auch nur aus einem einzigen Halteelement zur Aufnahme nur eines Adapters 21 ausgebildet sein. Nachdem auch der Adapter 21 aus der Spindel 5 ausgegeben worden ist, kann die Spindel 5 direkt, beispielsweise mittels eines oben beschriebenen Standardspannsatzes, ein Werkzeug 61 von dem Bearbeitungstisch 6 aufnehmen.

Erfindungsgemäß können Werkzeuge 61 zusätzlich in einem zweiten Magazin 7 vorgehalten werden. Hierdurch kann die Anzahl bevorrateter Werkzeuge 61 und damit die Flexibilität der Werkzeugmaschine 1 erhöht werden. Insbesondere kann die Spindel 5 nämlich auch zu dem zweiten Magazin 7 verfahren, um dort ein Werkzeug 61 aufzunehmen und mit diesem dann das vorher auf dem Bearbeitungstisch 6 abgelegte Werkstück 31 zu bearbeiten. Das Werkzeug 61 kann in diesem zweiten Magazin 7 in einem Werkzeugadapter 64 bereitgehalten werden, wenn das Werkzeug 61 nicht mit der Spindelaufnahme kompatibel ausgebildet ist.

Auch das zweite Magazin 7 kann ähnlich dem Fördermagazin 2 als Kettenmagazin, Tellermagazin oder Ringmagazin ausgebildet sein. In dem zweiten Magazin 7 werden mehrere verschiedenartige Werkzeuge 61 bereitgehalten. Alternativ können die Werkzeuge 61 auch ohne Adapter 64 bereitgehalten werden, um direkt in dem Spannsatz der Spindel 5 aufgenommen zu werden. Auch können ein Teil der Werkzeuge 61 in dem zweiten Magazin 7 mit Adaptern 64 sowie ein Teil der Werkzeuge 61 ohne Adapter 64 bereitgehalten werden. Alternativ können die Werkzeuge 61 nur in dem zweiten Magazin 7 zur Aufnahme in der Spindel 5 und somit getrennt von den Werkstücken 31 im Fördermagazin 2 ausgebildet sein.

Um Verfahrwege der Spindel 5 zu verkürzen, können das zweite Magazin 7 und das Fördermagazin 2 auch wie oben beschrieben als ein kombiniertes Magazin ausgebildet sein, wobei jeder Platz durch ein Werkzeug 61 oder ein Werkstück 31, beziehungsweise einen Adapter 21 oder einen Werkzeugadapter 64, belegbar ist. Alternativ können auch fest zugewiesene Plätze im kombinierten Magazin ausschließlich Werkzeugen 61 oder Werkstücken 31 zur Verfügung stehen.

Durch dieses erfindungsgemäß kombinierte Magazin kann der Verfahrweg der Spindel 5 weiter optimiert werden. Beispielsweise wird die Spindel 5 nach einem Ablegen des Werkstücks 31 auf dem Bearbeitungstisch 6 zurück zu dem kombinierten Magazin verfahren, um dort den Adapter 21 abzulegen und aus selbigem ein Werkzeug 61 mit oder ohne Adapter 64 aufzunehmen. Dabei findet ein Ablegen des Adapters 21 und Aufnehmen eines Werkzeugs 61 im gleichen Magazin statt.

Nachdem die Spindel 5 ein Werkzeug 61 entweder aus dem zweiten Magazin 7, dem Fördermagazin 2 oder von dem Bearbeitungstisch 6 aufgenommen hat, verfährt die Spindel 5 wieder in Richtung zu dem auf dem Bearbeitungstisch 6 gehaltenen Werkstück 31. Anschließend wird das Werkstück 31 durch ein Verfahren und Rotieren des nun in der Spindel 5 aufgenommenen Werkzeugs 61 bearbeitet. Auch hier kann das Werkstückhalteelement 62 zusätzlich zu einer Rotation des Werkzeugs 61 in der Spindel 5 das Werkstück 31 rotieren oder durch eine Bewegung des Bearbeitungstisches 6 verfahren werden.

Die Spindel 5 kann dabei nacheinander mehrere verschiedene Werkzeuge 61 aufnehmen, um das auf dem Bearbeitungstisch 6 gespannte Werkstück 61 zu bearbeiten. Neben spanabhebenden Bearbeitungen können auch hier analog weitere Fertigungsverfahren durchgeführt werden. Beispielsweise nimmt die Spindel 5 eine Lackierpistole auf, welche als Werkzeug 61 auf dem Bearbeitungstisch 6 bereitgehalten wird. Mit dieser Lackierpistole verfährt die Spindel 5 zu dem Werkstück 31 und lackiert das Werkstück 61 entsprechend. Anstelle oder zusätzlich zu der Lackierpistole können auch weitere alternative Werkzeuge 61, wie etwa eine Schweißpistole oder Klebepistole auf dem Bearbeitungstisch 6 bereitgehalten werden.

Nach der weiteren Bearbeitung legt die Spindel 5 das Werkzeug 61 wieder in dem zweiten Magazin 7 oder auf dem Bearbeitungstisch 6 ab, um anschließend wieder das Werkstück 31 nach einer vorherigen Aufnahme des Adapters 21 aus dem Fördermagazin 2 oder dem Adaptermagazin 66 aufzunehmen. Anschließend wird das Werkstück 31 wieder durch ein Verfahren der Spindel 5 gegen ein Werkzeug 61 auf dem Bearbeitungstisch 6 bearbeitet oder durch ein Verfahren der Spindel 5 zu einer nachgelagerten Station 9 ausgegeben.

Der Bearbeitungstisch 6 weist mehrere Bereiche auf, auf welchen jeweils verschiedenartige oder gleichartige Werkzeuge 61 bereitgehalten werden. So kann ein Bereich eine Reihe von Werkzeugen 61 entsprechend der Reihe von an dem Werkstück 31 durchzuführenden Bearbeitungsschritten enthalten. Beispielsweise wird zuerst eine Form des Werkstücks 31 durch Anfahren eines Fräswerkzeugs an dem Werkstück 31 geformt. Anschließend können Bohrungen mit verschiedenen Gewinden durch ein Anfahren von auf dem Bearbeitungstisch 6 gehaltenen Gewindeschneidern eingebracht werden. Am Ende kann das Werkstück 31 durch Anfahren eines ebenso auf dem Bearbeitungstisch 6 bereitgehaltenen Schleifkopfs bearbeitet werden. Diese Bearbeitungsschritte werden durch ein Verfahren der Spindel 5 zu den jeweiligen Werkzeugen 61 erreicht, die nebeneinander, vorzugsweise entsprechend der Reihe der Bearbeitungsschritte, auf dem Bearbeitungstisch 6 bereitgehalten werden.

Um zwischen den verschiedenen Bereichen zu wechseln, ist der Bearbeitungstisch 6 wie oben beschrieben als Schwenktisch ausgebildet. Hier können die verschiedenen Bereiche rechtwinklig zueinander angeordnet sein. Dabei befindet sich ein Bereich des Bearbeitungstischs 6 in der Bearbeitungsposition unter der Spindel 5, beziehungsweise in dem erreichbaren Verfahrbereich der Spindel 5. Die Werkzeuge 61 auf dem aktuell in der Bearbeitungsposition befindlichen Bereich stehen zur Werkstückbearbeitung bereit und können von der Spindel 5 angefahren werden.

An den anderen Bereichen, welche aktuell aus der Bearbeitungsposition geschwenkt sind, werden nun Werkzeugwechselvorgänge vorgenommen. Hierfür entnimmt eine extern vorgesehene Einrichtung Werkzeuge 61 von einem aus der Bearbeitungsposition verfahrenem Bereich des Bearbeitungstischs 6 und tauscht die Werkzeuge 61 gegen neue oder andersartige Werkzeuge 61 ein.

Hierdurch wird die Anzahl möglicher, in der Werkzeugmaschine 6 durchführbarer Bearbeitungsschritte erheblich vergrößert. Anstelle eines Schwenktisches kann der Bearbeitungstisch 6 auch als Lineartisch, bei welchem der gesamte Bearbeitungstisch 6 linear verfährt und so verschiedene Bereiche in die Bearbeitungsposition gelangen, oder als Drehtisch ausgebildet sein, wobei hier durch ein Drehen des Bearbeitungstischs 6 um die Z-Achse verschiedene Bereich in die Bearbeitungsposition bringbar sind.

Bei einem Austauschvorgang wird die Spindel 5 während des Verstellvorgangs aus einem Stellbereich des Bearbeitungstischs 6 verfahren, um nicht mit einem Teil des Bearbeitungstischs 6 zusammenzustoßen. Dieser Vorgang kennzeichnet im Wesentlichen den Zeitpunkt, an dem sich der in der Bearbeitungsposition befindende Bereich bewegt, um aus der Bearbeitungsposition zu verfahren, bis zu dem Zeitpunkt, an dem ein anderer Bereich des Bearbeitungstischs 6 in die Bearbeitungsposition verfahren ist. Anschließend verfährt die Spindel 5 mit dem darin aufgenommenen Werkstück 31 wieder in den Stellbereich, so dass das Werkstück 31 durch ein gerade ausgetauschtes Werkzeugs 61 weiterbearbeitet werden kann.

Der Austauschvorgang der Werkzeuge 61 an einem aus der Bearbeitungsposition verfahrenen Bereich wird dabei während der Werkstückbearbeitung, das heißt hauptzeitparallel, ausgeführt. Alternativ kann statt einem Wechselvorgang der Werkzeuge 61 auch nur die Reihe der auf dem Bearbeitungstisch 6 aufgenommenen Werkzeuge 61 verändert werden oder der gerade aus dem Bearbeitungsbereich verfahrene Tischbereich vollständig getauscht werden. Hierfür weist der Bearbeitungstisch 6 mehrere entnehmbare Bereiche auf, auf denen jeweils Werkzeuge 61 gehalten werden können und die leicht von dem Bearbeitungstisch 6 entnommen werden können.

Nach jedem Bearbeitungsschritt kann das Werkstück 31 durch ein Verfahren der Spindel 5 zu der nachgelagerten Station 9 ausgegeben werden. Alternativ kann auch ein Greifer vorgesehen sein, welcher das Werkstück 31 aus dem Werkstückhalteelement 62 auf dem Bearbeitungstisch 6 entnimmt und zu der nachgelagerten Station 9 bringt. Der Greifer kann das Werkstück 31 auch direkt aus der Spindel 5 entnehmen. Bei dieser Ausgestaltung kann die Spindel 5 während des Ausbringens des fertig bearbeiteten Werkstücks 31 aus dem Arbeitsraum durch den Greifer bereits wieder zu dem Fördermagazin 2 verfahren, um ein nächstes, zu bearbeitendes Werkstück 31 aufzunehmen.

Weiter enthält die Werkzeugmaschine 1 eine Messeinrichtung. Hierbei wird ein Lasermesssystem verwendet, welches in einem Arbeitsraum der Werkzeugmaschine 1 angeordnet ist. Das Lasermesssystem kann mit Hilfe des Triangulationsprinzips bzw. Lichtschnittverfahrens die Geometrie des sich in der Spindel 5 befindlichen Werkstücks 31 in dreidimensionalen Daten erfassen. Hierfür verfährt und rotiert die Spindel 5 mit dem Werkstück 31 innerhalb des Erfassungsbereichs des Messsystems. Zusätzlich können zur Erfassung von Oberflächenrauheitsmessungen konfokale Sensoren oder Interferometer zur Kontrolle verwendet werden. Die von der Messeinrichtung erfassten Werte werden an die Steuerung der Werkzeugmaschine 1 zur Verarbeitung übertragen.

Auf Basis dieser Messdaten werden Rückschlüsse über die aktuelle Bearbeitungsqualität getroffen. Beispielsweise kann durch einen Vergleich mit Sollwerten festgestellt werden, ob das bearbeitete Werkstück 31 noch in einem zuvor festgelegten Toleranzbereich liegt. Wird beispielsweise ermittelt, dass die Oberflächengüte des Werkstücks 31 nicht mehr in dem Toleranzbereich liegt, wirft die Spindel 5 das Werkstück 31 in eine gesondert angeordnete Auswurfeinrichtung aus. Damit kann direkt in der Werkzeugmaschine 1 eine Qualitätskontrolle durchgeführt werden.

Alternativ können die erfassten Daten in Echtzeit verarbeitet werden, wodurch eine anschließende Nachregelung des Bearbeitungsprozesses möglich ist. So kann während der Bearbeitung des Werkstücks 31 nachregelt und überprüft werden, ob und wann bestimmte Qualitätsanforderungen erfüllt sind. Auch können durch ein Verarbeiten der Messdaten Rückschlüsse auf den Verarbeitungsprozess gezogen werden.

Wird eine bestimmte Oberflächengüte des Werkstücks 31 nicht erreicht, kann daraus ermittelt werden, dass das Werkzeug 61 gegen ein neues Werkzeug 61 ausgetauscht werden muss. Auch können beispielsweise Drehzahlen bei einer nachfolgenden Bearbeitung verändert werden, wenn durch die Verarbeitung der Messdaten ermittelt wird, dass die aktuell eingestellte Drehzahl nicht zu den gewünschten Ergebnissen führt, d.h., wenn beispielsweise bestimmt wird, dass die Drehzahl zu gering ist.

Nachdem das Werkstück 31 an die nachgelagerte Station 9 ausgegeben worden ist, verfährt die Spindel 5 zurück zu dem Fördermagazin 2. In diesem Fördermagazin 2 legt die Spindel 5 den Adapter 21 wieder an einer bestimmten Position ab. Der leere Adapter 21 wird in dem Fördermagazin 2 entlang der vorbestimmten Bahn weitergefördert bis er wieder zu der Fügestation 4 gelangt. Hier wird erneut ein zu bearbeitendes Werkstück 31 in den Adapter 21 eingefügt. Während der leere Adapter 21 nach seinem Ablegen in dem Fördermagazin 2 weitergefördert wird, nimmt die Spindel 5 ein neues zu bearbeitendes Werkstück 31 mittels eines anderen Adapters 21 auf.

Offenbart ist ein Verfahren zur Bearbeitung von Werkstücken in einer Werkzeugmaschine mit den folgenden Schritten: Ein Adapter wird in einem Fördermagazin der Werkzeugmaschine entlang einer vorbestimmten Bahn geführt, während in einem Werkstückspeicher bevorratete Werkstücke vorbereitet und je einem Adapter zugeführt werden. Hierbei werden je ein Werkstück und ein Adapter derart zusammengefügt, dass das Werkstück von dem Adapter gehalten wird.

Die Adapter werden mit dem von diesem gehaltenen Werkstück in dem Fördermagazin weitergefördert und mit dem Werkstück aus dem Fördermagazin an eine motorisch betriebene Spindel der Werkzeugmaschine übergeben, in welcher der Adapter mit dem von diesem gehaltenen Werkstück gehalten wird. Danach wird die Spindel mit dem darin im Adapter gehaltenen Werkstück, gegen ein in einem Werkzeughalteelement auf einem Bearbeitungstisch gehaltenes Werkzeug verfahren und durch ein Rotieren der Spindel bearbeitet. Nach der Bearbeitung wird das Werkstück aus dem Adapter freigegeben und in ein Werkstückhalteelement auf dem Bearbeitungstisch abgelegt oder an eine nachgelagerte Station übergeben. Der leere Adapter wird von der Spindel zurück in das Fördermagazin geführt und dort weiter gefördert.

## Patentansprüche

1. Verfahren zur, vorzugsweise spanabhebenden, Bearbeitung von Werkstücken (31) in einer Werkzeugmaschine (1) mit einer motorisch betriebenen Spindel (5) mit einer daran angebrachten Aufnahme, wobei die Werkzeugmaschine (1) ferner aufweist:
ein Fördermagazin (2), in dem eine Mehrzahl von Adaptern (21) aufgenommen ist,
einen Werkstückspeicher (3), in dem eine Mehrzahl von Werkstücken (31) aufgenommen ist,
sowie einen Bearbeitungstisch (6) zur Aufnahme von Werkzeugen (61) und/oder Werkstücken (31),
wobei das Verfahren aufweist:
Führen der Adapter (21) in dem Fördermagazin (2) entlang einer vorbestimmten Bahn,
Zuführen von in dem Werkstückspeicher (3) bevorrateten Werkstücken (31) zu je einem Adapter (21) und Zusammenfügen je eines Werkstücks (31) mit je einem Adapter (21) derart, dass das Werkstück (31) von dem Adapter (21) gehalten wird,
Weiterfördern des Adapters (21) mit dem von diesem gehaltenen Werkstück (31) in dem Fördermagazin (2) entlang der vorbestimmten Bahn,
Übergeben des Adapters (21) mit dem von diesem gehaltenen Werkstück (31) aus dem Fördermagazin (2) an die Spindel (5) derart, dass der Adapter (21) mit dem von diesem gehaltenen Werkstück (31) von der Spindel (5) gehalten wird,
Bearbeiten des in der Spindel (5) befindlichen Werkstücks (31), vorzugsweise durch ein Verfahren und Rotieren der Spindel (5) gegen ein in einem Werkzeughalteelement (63) auf dem Bearbeitungstisch (6) gehaltenes Werkzeug (61),
Freigeben des Werkstücks (31) nach der Bearbeitung durch das auf dem Bearbeitungstisch (6) gehaltene Werkzeug (61) aus dem Adapter (21) und Ablegen des Werkstücks (31) in ein Werkstückhalteelement (62) auf dem Bearbeitungstisch (6) oder Übergeben des Werkstücks (31) zur weiteren Bearbeitung an eine nachgelagerte Station (9),
Übergeben des leeren Adapters (21) von der Spindel (5) zurück in das Fördermagazin (2), und
Weiterfördern des leeren Adapters (21) in dem Fördermagazin (2) entlang der vorbestimmten Bahn.

2. Verfahren nach Anspruch 1, wobei
das Werkstückhalteelement (62) und das Werkzeughalteelement (63) rotationsfähig auf dem Bearbeitungstisch (6) ausgebildet sind, und das Verfahren weiter aufweist:
Rotieren des in dem Werkstückhalteelement (62) gehaltenen Werkstücks (31) oder des in dem Werkzeughalteelement (63) gehaltenen Werkzeugs (61) zeitgleich zu oder anstelle der Rotation der Spindel (5) zur Bearbeitung des Werkstücks (31).

3. Verfahren nach Anspruch 1 oder 2, wobei die Spindel (5) derart ausgestaltet ist, dass diese anstelle des Adapters (21) mit dem darin gehaltenen Werkstück (31) auch das Werkzeug (61), direkt oder über einen Werkzeugadapter (64), aufnehmen kann, und die Werkzeugmaschine (1) ein zweites Magazin (7) aufweist, in dem Werkzeuge (61), direkt oder in Werkzeugadaptern (64) aufgenommen sind, wobei
nach dem Schritt des Freigebens des Werkstücks (31) aus dem Adapter (21) und dem Ablegen des Werkstücks (31) in dem Werkstückhalteelement (62) auf dem Bearbeitungstisch (6) das Werkstück (31) von dem Werkstückhalteelement (62) auf dem Bearbeitungstisch (6) gehalten wird, und
die Spindel (5) zurück zum Fördermagazin (2) verfahren wird, um den leeren Adapter (21) aus der Spindel (5) in das Fördermagazin (2) zu übergeben, und dann ein Werkzeug (61) aus dem zweiten Magazin (7) oder aus dem Werkzeughalteelement (63) auf dem Bearbeitungstisch (6), direkt oder vermittels des Werkzeugadapters (64), in der Spindel (5) aufzunehmen,
weiter aufweisend:
Verfahren der Spindel (5) mit dem darin gehaltenen Werkzeug (61) in Richtung zum Bearbeitungstisch (6) zum Weiterbearbeiten des in dem Werkstückhalteelement (62) auf dem Bearbeitungstisch (6) gehaltenen Werkstücks (31) durch das Werkzeug (61),
Ablegen des von der Spindel (5), direkt oder über den Werkzeugadapter (64), gehaltenen Werkzeugs (61) aus der Spindel (5) nach der Weiterbearbeitung des Werkstücks (31) zurück in das zweite Magazin (7) oder in das Werkzeughalteelement (63) auf dem Bearbeitungstisch (6), und
Ausgeben des auf dem Bearbeitungstisch (6) gehaltenen Werkstücks (31) nach einem Lösen des Werkstücks (31) aus dem Werkstückhalteelement (62) an eine nachgelagerte Station (9).

4. Verfahren nach Anspruch 1 oder 2, wobei die Spindel (5) derart ausgestaltet ist, dass diese anstelle des Adapters (21) mit dem darin gehaltenen Werkstück (31) auch das Werkzeug (61), direkt oder über einen Werkzeugadapter (64), aufnehmen kann, und wobei die Werkzeugmaschine (1) ein zweites Magazin (7) aufweist, in dem Werkzeuge (61), direkt oder in Werkzeugadaptern (64) aufgenommen sind, und auf dem Bearbeitungstisch (6) ein Adaptermagazin (66) zum Aufnehmen von Adaptern (21) ausgebildet ist, wobei
nach dem Schritt des Freigebens des Werkstücks (31) aus dem Adapter (21) und dem Ablegen des Werkstücks (31) in dem Werkstückhalteelement (62) auf dem Bearbeitungstisch (6) das Werkstück (31) von dem Werkstückhalteelement (62) auf dem Bearbeitungstisch (6) gehalten wird, und
die Spindel (5) den Adapter (21) in das Adaptermagazin (66) auf dem Bearbeitungstisch (6) ablegt,
weiter aufweisend:
Aufnehmen eines Werkzeugs (61) aus dem Werkzeughalteelement (63) auf dem Bearbeitungstisch (6) oder aus dem zweiten Magazin (7), direkt oder vermittels des Werkzeugadapters (64), in der Spindel (5),
Verfahren der Spindel (5) mit dem darin aufgenommenen Werkzeug (61) in Richtung zu dem auf dem Bearbeitungstisch (6) in dem Werkstückhalteelement (62) gehaltenen Werkstück (31), um das Werkstück (31) weiter zu bearbeiten, und
Ablegen des Werkzeugs (61) aus der Spindel (5) zurück in das zweite Magazin (7) oder in das Werkzeughalteelement (63) auf dem Bearbeitungstisch (6) nach der Bearbeitung des Werkstücks (31).

5. Verfahren nach Anspruch 4, wobei
die Spindel (5) nach der Bearbeitung des in dem Werkstückhalteelement (62) gehaltenen Werkstücks (31) und dem Ablegen des Werkzeugs (61) einen Adapter (21) aus dem Adaptermagazin (66) aufnimmt und vermittels diesem das in dem Werkstückhalteelement (62) gehaltene Werkstück (31) erneut in der Spindel (5) aufnimmt, um das Werkstück (31) durch ein erneutes Verfahren und Rotieren der Spindel (5) und/oder Rotieren eines auf dem Bearbeitungstisch (6) in einem Werkzeughalteelement (63) gehaltenen Werkzeugs (61) weiter zu bearbeiten oder das Werkstück (31) in die nachgelagerte Station (9) auszugeben, und wobei
der Bearbeitungstisch (6) während der Bearbeitung des Werkstücks (31) vorzugsweise in seiner Lage relativ zu einer Rotationsachse der Spindel (5) verstellt wird.

6. Verfahren nach einem der Ansprüche 1 bis 5, wobei auf dem Bearbeitungstisch (6) mehrere verschiedenartige Werkzeuge (61) zur Bearbeitung des Werkstücks (31) bereitgehalten werden, und das Verfahren weiter aufweist:
Verfahren der Spindel (5) mit dem durch den Adapter (21) gehaltenen Werkstück (31) nach einer ersten Bearbeitung des Werkstücks (31) durch ein erstes Werkzeug (61) in Richtung zu einem auf dem Bearbeitungstisch (6) durch das Werkzeughalteelement (63) gehaltenen zweiten Werkzeug (61),
Weiterbearbeiten des in der Spindel (5) mittels des Adapters (21) gehaltenen Werkstücks (31) durch das auf dem Bearbeitungstisch (6) gehaltene zweite Werkzeug (61) und
Verfahren der Spindel (5) zu einem weiteren auf dem Bearbeitungstisch (6) gehaltenen Werkzeug (61) zur Weiterbearbeitung des Werkstücks (31) oder zum Ablegen des Werkstücks (31) in dem Werkstückhalteelement (62) auf dem Bearbeitungstisch (6) oder in der nachgelagerten Station (9).

7. Verfahren nach einem der Ansprüche 1 bis 6, wobei der Bearbeitungstisch (6) mehrere Bereiche aufweist, auf welchen jeweils verschiedenartige Werkzeuge (61) zur Bearbeitung des Werkstücks (31) gehalten werden können, wobei der Bearbeitungstisch (6) derart veränderbar ist, dass auf einem Bereich auf dem Bearbeitungstisch (6) gehaltene Werkzeuge (61) ausgetauscht werden können und zeitgleich auf einem anderen Bereich in Werkzeughalteelementen (63) gehaltene Werkzeuge (61) oder ein im Werkstückhalteelement (62) gehaltenes Werkstück (31) an der Bearbeitung des Werkstücks (31) beteiligt sein kann, wobei das Verfahren weiter aufweist:
Bearbeiten des mittels des Adapters (21) in der Spindel (5) gehaltenen Werkstücks (31) durch ein Verfahren und Rotieren der Spindel (5) und/oder durch ein Rotieren des in dem Werkzeughalteelement (63) an einem ersten Bereich des Bearbeitungstischs (6) gehaltenen Werkzeugs (61),
Verfahren der Spindel (5) aus einem Stellbereich des Bearbeitungstischs (6) nach einer ersten Bearbeitung des Werkstücks (31),
Verstellen des Bearbeitungstischs (6) derart, dass der erste Bereich aus einer Bearbeitungsposition und ein zweiter Bereich in die Bearbeitungsposition verfahren wird, so dass im zweiten Bereich gehaltene Werkzeuge (61) zur Bearbeitung des Werkstücks (31) bereit stehen,
Verfahren der Spindel (5) hin zu dem Bearbeitungstisch (6) nachdem der Verstellvorgang des Bearbeitungstischs (6) abgeschlossen ist, und
Weiterbearbeiten des mittels des Adapters (21) in der Spindel (5) gehaltenen Werkstücks (31) durch ein Verfahren und Rotieren der Spindel (5) und/oder durch ein Rotieren des in dem Werkzeughalteelement (63) auf dem zweiten Bereich des Bearbeitungstischs (6) gehaltenen Werkzeugs (61).

8. Verfahren nach einem der Ansprüche 1 bis 7, wobei die Werkzeugmaschine (1) ferner eine Messeinrichtung und eine Steuereinrichtung aufweist, und wobei
die Spindel (5) während der Bearbeitung des Werkstücks (31) in einen Erfassungsbereich der Messeinrichtung verfahren wird,
das in der Spindel (5) durch den Adapter (21) gehaltene Werkstück (31) in seiner Geometrie vermessen wird, und
die erfassten Messdaten zu der Steuereinrichtung übertragen werden.

9. Werkzeugmaschine (1) zur, vorzugsweise spanabhebenden, Bearbeitung von Werkstücken (31), aufweisend:
eine motorisch betriebene Spindel (5) mit einer daran angebrachten Aufnahme,
ein Fördermagazin (2), in dem eine Mehrzahl von Adaptern (21) aufnehmbar ist, und in dem die Adapter (21) entlang einer vorbestimmten Bahn führbar sind,
einen Werkstückspeicher (3), in dem eine Mehrzahl von Werkstücken (31) aufnehmbar ist,
ein zweites Magazin (7), in welchem Werkzeuge (61), direkt oder über Werkzeugadapter (64), aufgenommen sind,
eine Fügestation (4), an welcher je ein Werkstück (31) aus dem Werkstückspeicher (3) mit je einem in dem Fördermagazin (2) aufgenommenen Adapter (21) zusammengefügt wird, so dass das Werkstück (31) von dem Adapter (21) gehalten wird, und der Adapter (21) mit dem darin gehaltenen Werkstück (31) weiter in dem Fördermagazin (2) führbar ist, und
einen Bearbeitungstisch (6) mit Werkzeughalteelementen (63) zur Aufnahme von Werkzeugen (61) und mit Werkstückhalteelementen (62) zur Aufnahme von Werkstücken (31), wobei
die Spindel (5) zur Bearbeitung eines Werkstücks (31) rotatorisch und translatorisch bewegbar ist und derart gegen den Bearbeitungstisch (6) verfahrbar ist, dass das Werkstück (31) bearbeitbar ist, und wobei
die Spindel (5) derart ausgestaltet ist, dass diese in der Aufnahme auf dem Bearbeitungstisch (6) oder in dem Fördermagazin (2) gehaltene Werkstücke (31) mittels Adaptern (21) oder auf dem Bearbeitungstisch (6) und in dem zweiten Magazin (7) gehaltene Werkzeuge (61), direkt oder mittels Werkzeugadaptern (64), aufnehmen kann, um das Werkstück (31) zu bearbeiten.

10. Werkzeugmaschine (1) nach Anspruch 9, weiter aufweisend:
ein Adaptermagazin (66) zum Aufnehmen von Adaptern (21) und/oder Werkzeugadaptern (64) aus der Spindel (5), wobei das Adaptermagazin (66) auf dem Bearbeitungstisch (6) ausgebildet ist.

11. Werkzeugmaschine (1) nach Anspruch 9 oder 10, wobei
das zweite Magazin (7) und das Fördermagazin (2) als ein kombiniertes Magazin ausgebildet sind, in dem die Adapter (21) und die Werkzeuge (61), direkt oder in Werkzeugadaptern (64), aufgenommen sind.

12. Werkzeugmaschine (1) nach einem der Ansprüche 9 bis 11, wobei
der Werkzeugadapter (64) und der Adapter (21) als ein kombinierter Adapter ausgebildet sind, in welchem sowohl Werkzeuge (61) als auch Werkstücke (31) zur Bearbeitung des Werkstücks (31) haltbar sind.

13. Werkzeugmaschine (1) nach einem der Ansprüche 9 bis 12, wobei:
das Werkstückhalteelement (62) und das Werkzeughalteelement (63) als Rotationselemente auf dem Bearbeitungstisch (6) ausgebildet sind, so dass in den Rotationselementen gehaltene Werkstücke (31) und Werkzeuge (61) zur Bearbeitung des Werkstücks (31) zeitgleich oder anstelle der Rotation der Spindel (5) rotierbar sind, und wobei
der Bearbeitungstisch (6) während der Bearbeitung des Werkstücks (31) in seiner Lage vorzugsweise relativ zu einer Rotationsachse der Spindel (5) verstellbar ist.

14. Werkzeugmaschine (1) nach einem der Ansprüche 9 bis 13, wobei:
der Bearbeitungstisch (6) mehrere Bereiche aufweist, auf welchen jeweils verschiedenartige Werkzeuge (61) zur Bearbeitung des Werkstücks (31) haltbar sind, wobei der Bearbeitungstisch (6) derart veränderbar ist, so dass an einem Bereich auf dem Bearbeitungstisch (6) gehaltene Werkzeuge (61) austauschbar sind und zeitgleich auf einem anderen Bereich in Werkzeughalteelementen (63) gehaltene Werkzeuge (61) oder ein im Werkstückhalteelement (62) gehaltenes Werkstück (31) an der, vorzugsweise spanabhebenden, Bearbeitung des Werkstücks (31) beteiligt sein können.

15. Werkzeugmaschine (1) nach einem der Ansprüche 9 bis 15, wobei:
die Werkzeugmaschine (1) eine Messeinrichtung und eine Steuereinrichtung aufweist und die Spindel (5) in einen Erfassungsbereich der Messeinrichtung verfahrbar ist, so dass das in der Spindel (5) durch den Adapter (21) gehaltene Werkstück (31) in seiner Geometrie vermessen werden kann und die erfassten Daten von der Steuereinrichtung empfangbar sind.

## Claims

1. Method for machining, preferably for cutting, workpieces (31) in a machine tool (1) having a motor-driven spindle (5) which has a receptacle attached thereto, wherein the machine tool (1) further comprises:
a conveyor magazine (2) in which a plurality of adapters (21) are received;
a workpiece storage space (3) in which a plurality of workpieces (31) are received; and
a machining table (6) for receiving tools (61) and/or workpieces (31), wherein the method comprises:
guiding the adapters (21) in the conveyor magazine (2) along a predetermined path;
feeding workpieces (31) that are stored in the workpiece storage space (3) to a particular adapter (21) and joining each workpiece (31) to a particular adapter (21) such that the workpiece (31) is held by the adapter (21);
further conveying the adapter (21) together with the workpiece (31) held thereby in the conveyor magazine (2) along the predetermined path;
transferring the adapter (21) together with the workpiece (31) held thereby from the conveyor magazine (2) to the spindle (5) such that the adapter (21) together with the workpiece (31) held thereby is held by the spindle (5);
machining the workpiece (31) located in the spindle (5), preferably by moving and rotating the spindle (5) against a tool (61) which is held in a tool holding element (63) on the machining table (6);
releasing the workpiece (31), after being worked on by the tool (61) held on the machining table (6), from the adapter (21) and placing the workpiece (31) into a workpiece holding element (62) on the machining table (6) or transferring the workpiece (31) to a downstream station (9) for further machining;
transferring the empty adapter (21) from the spindle (5) back into the conveyor magazine (2); and
further conveying the empty adapter (21) in the conveyor magazine (2) along the predetermined path.

2. Method according to claim 1, wherein the workpiece holding element (62) and the tool holding element (63) are rotatable on the machining table (6), and the method further comprises:
rotating the workpiece (31) which is held in the workpiece holding element (62) or rotating the tool (61) which is held in the tool holding element (63) simultaneously to or instead of rotating the spindle (5) in order to machine the workpiece (31).

3. Method according to either claim 1 or claim 2, wherein the spindle (5) is designed such that, instead of the adapter (21) together with the workpiece (31) held therein, said spindle can also receive the tool (61) directly or by means of a tool adapter (64), and the machine tool (1) comprises a second magazine (7) in which tools (61) are received directly or in tool adapters (64), wherein, after the step of releasing the workpiece (31) from the adapter (21) and placing the workpiece (31) in the workpiece holding element (62) on the machining table (6), the workpiece (31) is held by the workpiece holding element (62) on the machining table (6), and the spindle (5) is moved back to the conveyor magazine (2) in order to transfer the empty adapter (21) from the spindle (5) into the conveyor magazine (2), and then, directly or by means of the tool adapter (64), to receive a tool (61) in the spindle (5) from the second magazine (7) or from the tool holding element (63) on the machining table (6), the method further comprising:
moving the spindle (5) together with the tool (61) held therein toward the machining table (6) in order to further machine the workpiece (31), which is held in the workpiece holding element (62) on the machining table (6), by means of the tool (61);
placing the tool (61) that is held by the spindle (5), directly or by means of the tool adapter (64), from the spindle (5) back into the second magazine (7) or into the tool holding element (63) on the machining table (6) after the workpiece (31) has been further machined; and
delivering the workpiece (31) that is held on the machining table (6) to a downstream station (9) after the workpiece (31) has been detached from the workpiece holding element (62).

4. Method according to either claim 1 or claim 2, wherein the spindle (5) is designed such that, instead of the adapter (21) together with the workpiece (31) held therein, said spindle can also receive the tool (61) directly or by means of a tool adapter (64), and wherein the machine tool (1) comprises a second magazine (7) in which tools (61) are received directly or in tool adapters (64), and an adapter magazine (66) is formed on the machining table (6) for receiving adapters (21), wherein, after the step of releasing the workpiece (31) from the adapter (21) and placing the workpiece (31) in the workpiece holding element (62) on the machining table (6), the workpiece (31) is held by the workpiece holding element (62) on the machining table (6), and the spindle (5) places the adapter (21) into the adapter magazine (66) on the machining table (6), the method further comprising:
receiving a tool (61), directly or by means of the tool adapter (64), in the spindle (5) from the tool holding element (63) on the machining table (6) or from the second magazine (7); moving the spindle (5) together with the tool (61) received therein toward the workpiece (31) that is held on the machining table (6) in the workpiece holding element (62) in order to further machine the workpiece (31); and
placing the tool (61) from the spindle (5) back into the second magazine (7) or into the tool holding element (63) on the machining table (6) after the workpiece (31) has been machined.

5. Method according to claim 4, wherein, after the workpiece (31) which is held in the workpiece holding element (62) has been machined and after the tool (61) has been placed, the spindle (5) receives an adapter (21) from the adapter magazine (66) and, by means of said adapter, receives the workpiece (31) that is held in the workpiece holding element (62) in the spindle (5) again in order to further machine the workpiece (31) by moving and rotating the spindle (5) again and/or by rotating a tool (61) which is held on the machining table (6) in a tool holding element (63), or in order to deliver the workpiece (31) to the downstream station (9), and wherein the machining table (6) is adjusted during the machining of the workpiece (31), preferably in terms of its position relative to a rotation axis of the spindle (5).

6. Method according to any of claims 1 to 5, wherein a plurality of different types of tools (61) for machining the workpiece (31) are kept on the machining table (6), and the method further comprises:
moving the spindle (5) together with the workpiece (31) that is held by the adapter (21), by means of a first tool (61), after the workpiece (31) has been machined for a first time, toward a second tool (61) which is held on the machining table (6) by means of the tool holding element (63);
further machining the workpiece (31) which is held in the spindle (5) by means of the adapter (21), using the second tool (61) which is held on the machining table (6); and
moving the spindle (5) toward a further tool (61) which is held on the machining table (6) in order to further machine the workpiece (31) or in order to place the workpiece (31) in the workpiece holding element (62) on the machining table (6) or in the downstream station (9).

7. Method according to any of claims 1 to 6, wherein the machining table (6) comprises a plurality of regions, on each of which various types of tools (61) for machining the workpiece (31) can be held, wherein the machining table (6) can be modified such that tools (61) held on a region on the machining table (6) can be exchanged, and simultaneously tools (61) held on another region in tool holding elements (63) or a workpiece (31) held in the workpiece holding element (62) can be involved in machining the workpiece (31), wherein the method further comprises:
machining the workpiece (31), which is held in the spindle (5) by means of the adapter (21), by moving and rotating the spindle (5) and/or by rotating the tool (61) held in the tool holding element (63) at a first region of the machining table (6);
moving the spindle (5) from an operating region of the machining table (6) after the workpiece (31) has been machined for a first time;
adjusting the machining table (6) such that the first region is moved out of a machining position and a second region is moved into the machining position, such that tools (61) which are held in the second region are ready to machine the workpiece (31);
moving the spindle (5) toward the machining table (6) after the adjustment process of the machining table (6) is complete; and
further machining the workpiece (31), which is held in the spindle (5) by means of the adapter (21), by moving and rotating the spindle (5) and/or rotating the tool (61) held in the tool holding element (63) on the second region of the machining table (6).

8. Method according to any of claims 1 to 7, wherein the machine tool (1) further comprises a measuring device and a control device, and wherein the spindle (5) is moved into a detection region of the measuring device during the machining of the workpiece (31), the geometry of the workpiece (31) which is held in the spindle (5) by the adapter (21) is measured, and the detected measurement data are transmitted to the control device.

9. Machine tool (1) for machining, preferably for cutting, workpieces (31), comprising:
a motor-driven spindle (5) which has a receptacle attached thereto;
a conveyor magazine (2) in which a plurality of adapters (21) can be received, and in which the adapters (21) can be guided along a predetermined path;
a workpiece storage space (3) in which a plurality of workpieces (31) can be received;
a second magazine (7) in which tools (61) are received directly or by means of tool adapters (64);
a joining station (4), at which each workpiece (31) from the workpiece storage space (3) is joined to a particular adapter (21) which is received in the conveyor magazine (2), such that the workpiece (31) is held by the adapter (21), and the adapter (21) together with the workpiece (31) held therein can be guided further in the conveyor magazine (2); and
a machining table (6) which has tool holding elements (63) for receiving tools (61) and workpiece holding elements (62) for receiving workpieces (31), wherein the spindle (5) can be moved rotationally and translationally in order to machine a workpiece (31) and can be moved against the machining table (6) such that the workpiece (31) can be machined, and wherein the spindle (5) is designed such that, by means of adapters (21), said spindle can receive workpieces (31) which are held in the receptacle on the machining table (6) or in the conveyor magazine (2), or, directly or by means of tool adapters (64), receive tools (61) held on the machining table (6) and in the second magazine (7) in order to machine the workpiece (31).

10. Machine tool (1) according to claim 9, further comprising:
an adapter magazine (66) for receiving adapters (21) and/or tool adapters (64) from the spindle (5), wherein the adapter magazine (66) is formed on the machining table (6).

11. Machine tool (1) according to either claim 9 or claim 10, wherein the second magazine (7) and the conveyor magazine (2) are formed as a combined magazine in which the adapters (21) and the tools (61) are received directly or in tool adapters (64).

12. Machine tool (1) according to any of claims 9 to 11, wherein the tool adapter (64) and the adapter (21) are formed as a combined adapter in which tools (61) and workpieces (31) can be held in order to machine the workpiece (31).

13. Machine tool (1) according to any of claims 9 to 12, wherein:
the workpiece holding element (62) and the tool holding element (63) are formed as rotation elements on the machining table (6) such that workpieces (31) and tools (61) which are held in the rotation elements can be rotated simultaneously to or instead of rotating the spindle (5) in order to machine the workpiece (31), and wherein the machining table (6) can be adjusted in terms of its position preferably relative to a rotation axis of the spindle (5), during the machining of the workpiece (31).

14. Machine tool (1) according to any of claims 9 to 13, wherein:
the machining table (6) comprises a plurality of regions, on each of which various types of tools (61) for machining the workpiece (31) can be held, wherein the machining table (6) can be modified such that tools (61) held on a region on the machining table (6) can be exchanged, and simultaneously tools (61) held on another region in tool holding elements (63) or a workpiece (31) held in the workpiece holding element (62) can be involved in machining, preferably cutting, the workpiece (31).

15. Machine tool (1) according to any of claims 9 to 15, wherein:
the machine tool (1) comprises a measuring device and a control device and the spindle (5) can be moved into a detection region of the measuring device such that the geometry of the workpiece (31) which is held in the spindle (5) by the adapter (21) can be measured and the detected data can be received by the control device.

## Revendications

1. Procédé pour usiner, de préférence par enlèvement de copeaux, des pièces à usiner (31) dans une machine-outil (1) présentant une broche entraînée par moteur (5) à laquelle est fixé un réceptacle, la machine-outil (1) comprenant en outre :
un chargeur d'alimentation (2) dans lequel sont reçus plusieurs adaptateurs (21), une réserve de pièces à usiner (3) dans laquelle sont reçues plusieurs pièces à usiner (31),
ainsi qu'une table d'usinage (6) pour recevoir des outils (61) et/ou des pièces à usiner (31),
dans lequel le procédé présente les étapes consistant à :
guider les adaptateurs (21) jusque dans le chargeur d'alimentation (2) le long d'une trajectoire prédéterminée,
fournir des pièces à usiner (31) stockées dans la réserve de pièces à usiner (3) à chaque adaptateur (21), et assembler chaque pièce à usiner (31) avec un adaptateur (21) de telle sorte que la pièce à usiner (31) soit maintenue par l'adaptateur (21)
alimenter en outre l'adaptateur (21) avec la pièce à usiner (31) maintenue par celui-ci dans le chargeur d'alimentation (2) le long de la trajectoire prédéterminée,
transmettre l'adaptateur (21), muni de la pièce à usiner (31) qu'il retient, du chargeur d'alimentation (2) à la broche (5), de telle sorte que l'adaptateur (21) soit maintenu par la broche (5) conjointement avec la pièce à usiner (31) qu'il maintient,
usiner la pièce à usiner (31) se trouvant dans la broche (5), de préférence par un procédé et faire tourner la broche (5) contre un outil (61) maintenu dans un élément de retenue d'outil (63) sur la table d'usinage (6),
libérer la pièce à usiner (31) de l'adaptateur (21) après l'usinage à l'aide de l'outil (61) maintenu sur la table d'usinage (6) et déposer la pièce à usiner (31) dans un élément de retenue de pièce à usiner (62) sur la table d'usinage (6) ou transférer la pièce à usiner (31) pour traitement ultérieur vers un poste (9) disposé en aval,
transmettre l'adaptateur (21) vide sans la broche (5) en retour dans le chargeur d'alimentation (2), et
alimenter en outre l'adaptateur vide (21) dans le chargeur d'alimentation (2) le long de la trajectoire prédéterminée.

2. Procédé selon la revendication 1, dans lequel
l'élément de retenue de pièce à usiner (62) et l'élément de retenue d'outil (63) sont agencés de manière rotative sur la table de travail (6), et le procédé comprend en outre l'étape consistant à :
faire tourner la pièce à usiner (31) maintenue dans l'élément de retenue de pièce à usiner (62) ou l'outil (61) maintenu dans l'élément de retenue d'outil (63) en même temps que ou à la place de la rotation de la broche (5) pour l'usinage de la pièce à usiner (31).

3. Procédé selon la revendication 1 ou 2, dans lequel la broche (5) est conçue de telle sorte que celle-ci, à la place de l'adaptateur (21) avec la pièce à usiner (31) maintenue dans celui-ci, peut recevoir l'outil (61), directement ou via un adaptateur d'outil (64), et la machine-outil (1) présente un second chargeur (7) dans lequel des outils (61) sont reçus directement ou dans des adaptateurs d'outil (64), dans lequel
après l'étape consistant à libérer la pièce à usiner (31) de l'adaptateur (21) et à déposer la pièce à usiner (31) dans l'élément de retenue de pièce à usiner (62) sur la table d'usinage (6), la pièce à usiner (31) de l'élément de retenue de pièce à usiner (62) est maintenue sur la table d'usinage (6), et
la broche (5) est ramenée dans le chargeur d'alimentation (2) afin de transférer l'adaptateur vide (21) sans la broche (5) dans le chargeur d'alimentation (2), et de recevoir ensuite un outil (61) provenant du second chargeur (7) ou de l'élément de retenue d'outil (63) sur la table d'usinage (6), directement ou au moyen de l'adaptateur d'outil (64), dans la broche (5),
présentant en outre les étapes consistant à :
déplacer la broche (5) avec l'outil (61) maintenu dans celle-ci en direction de la table d'usinage (6) en vue d'un traitement ultérieur par l'outil (61) de la pièce à usiner (31) maintenue dans l'élément de retenue de pièce à usiner (62) sur la table d'usinage (6) ;
déposer l'outil (61) maintenu par la broche (5), directement ou via l'adaptateur d'outil (64), hors de la broche (5) après le traitement ultérieur de la pièce à usiner (31) dans le second chargeur (7) ou dans l'élément de retenue d'outil (63) sur la table d'usinage (6), et
décharger la pièce à usiner (31) maintenue sur la table d'usinage (6), après avoir libéré la pièce à usiner (31) de l'élément de retenue de pièce à usiner (62), vers un poste (9) disposé en aval.

4. Procédé selon la revendication 1 ou 2, dans lequel la broche (5) est conçue de telle manière que celle-ci, à la place de l'adaptateur (21) avec la pièce à usiner (31) maintenue dans celui-ci, peut recevoir l'outil (61), directement ou via un adaptateur d'outil (64), et dans lequel la machine-outil (1) présente un second chargeur (7) dans lequel des outils (61) sont reçus directement ou dans des adaptateurs d'outil (64), et un chargeur d'adaptateur (66) destiné à recevoir des adaptateurs (21) est agencé sur la table d'usinage (6), dans lequel
après l'étape consistant à libérer la pièce à usiner (31) de l'adaptateur (21) et à déposer la pièce à usiner (31) dans l'élément de retenue d'outil (62) sur la table d'usinage (6), la pièce à usiner (31) est maintenue par l'élément de retenue de pièce à usiner (62) sur la table d'usinage (6), et
la broche (5) dépose l'adaptateur (21) dans le chargeur d'adaptateurs (66) sur la table d'usinage (6),
présentant en outre les étapes consistant à :
recevoir un outil (61) provenant de l'élément de retenue d'outil (63) sur la table d'usinage (6) ou du second chargeur (7), directement ou au moyen de l'adaptateur d'outil (64), dans la broche (5),
déplacer la broche (5) avec l'outil (61) reçu dans celle-ci dans la direction de la pièce à usiner (31) maintenue sur la table d'usinage (6) dans l'élément de retenue de pièce à usiner (62) pour usiner davantage la pièce à usiner (31), et
redéposer l'outil (61) depuis la broche (5) dans le second chargeur (7) ou dans l'élément de retenue d'outil (63) sur la table d'usinage (6) après le traitement de la pièce à usiner (31).

5. Procédé selon la revendication 4, dans lequel
la broche (5) reçoit un adaptateur (21) provenant du chargeur d'adaptateurs (66) après usinage de la pièce à usiner (31) maintenue dans l'élément de retenue de pièce à usiner (62) et dépose de l'outil (61), et de cette manière reçoit de nouveau la pièce à usiner (31) maintenue dans l'élément de retenue de pièce à usiner (62) dans la broche (5), pour traiter davantage la pièce à usiner (31) par un nouveau procédé et en faisant tourner la broche (5) et/ou en faisant tourner un outil (61) maintenu sur la table d'usinage (6) élément de retenue d'outil (63) ou pour transférer la pièce à usiner (31) vers le poste (9) disposé en aval, et dans lequel
la table de travail (6) est ajustée pendant le traitement de la pièce à usiner (31) de préférence dans sa position par rapport à un axe de rotation de la broche (5)

6. Procédé selon l'une quelconque des revendications 1 à 5, dans lequel une pluralité d'outils différents (61) pour traiter la pièce à usiner (31) sont maintenus sur la table d'usinage (6), et le procédé présente en outre les étapes consistant à :
déplacer la broche (5) avec la pièce à usiner (31) maintenue par l'adaptateur (21) après un premier usinage de la pièce à usiner (31) par un premier outil (61) dans la direction d'un second outil (61) maintenu sur la table d'usinage (6) par l'élément de retenue d'outil (63),
traiter davantage la pièce à usiner (31) maintenue dans la broche (5) au moyen de l'adaptateur (21) par le second outil (61) maintenu sur la table d'usinage (6) et
déplacer la broche (5) vers un outil supplémentaire (61) maintenu sur la table d'usinage (6) pour poursuivre le traitement de la pièce à usiner (31) ou pour déposer la pièce à usiner (31) dans l'élément de retenue de pièce à usiner (62) sur la table d'usinage (6) ou dans le poste (9) disposé en aval.

7. Procédé selon l'une quelconque des revendications 1 à 6, dans lequel la table d'usinage (6) présente une pluralité de zones sur lesquelles différents types d'outils (61) permettant d'usiner la pièce à usiner (31) peuvent être maintenus, dans lequel la table d'usinage (6) peut être modifiée de telle sorte que des outils (61) maintenus sur une zone de la table d'usinage (6) peuvent être échangés et en même temps, des outils (61) maintenus sur une autre zone dans des éléments de retenue d'outil (63) ou une pièce à usiner (31) maintenue dans l'élément de retenue de pièce à usiner (62) peuvent être impliqués dans l'usinage de la pièce à usiner (31), dans lequel le procédé présente en outre les étapes consistant à :
usiner la pièce à usiner (31) maintenue dans la broche (5) à l'aide de l'adaptateur (21) en déplaçant et en faisant tourner la broche (5) et/ou en faisant tourner l'outil (61) maintenu dans l'élément de retenue d'outil (63) au niveau d'une première zone de la table d'usinage (6),
déplacer la broche (5) à partir d'une zone de réglage de la table d'usinage (6) après un premier usinage de la pièce à usiner (31),
ajuster la table d'usinage (6) de sorte que la première zone soit déplacée d'une position d'usinage et qu'une seconde zone soit déplacée dans la position d'usinage, de sorte que des outils (61) maintenus dans la seconde zone soient prêts pour un usinage de la pièce à usiner (31),
déplacer la broche (5) vers la table d'usinage (6) après la fin du processus d'ajustement de la table d'usinage (6), et
traiter davantage la pièce à usiner (31) maintenue dans la broche (5) au moyen de l'adaptateur (21) en déplaçant et en faisant tourner la broche (5) et/ou en faisant tourner l'outil (61) maintenu dans l'élément de retenue d'outil (63) sur la seconde zone de la table d'usinage (6).

8. Procédé selon l'une des revendications 1 à 7, dans lequel la machine-outil (1) présente en outre un dispositif de mesure et un dispositif de commande, et dans lequel
la broche (5) est déplacée dans une zone de détection du dispositif de mesure pendant l'usinage de la pièce à usiner (31),
la pièce à usiner (31) maintenue dans la broche (5) par l'adaptateur (21) est mesurée par rapport à sa géométrie, et
les données de mesure acquises sont transmises au dispositif de commande.

9. Machine-outil (1) pour usiner, de préférence par enlèvement de copeaux, des pièces à usiner (31), présentant :
une broche entraînée par moteur (5) à laquelle est fixée un réceptacle,
un chargeur d'alimentation (2) dans lequel peuvent être reçus plusieurs adaptateurs (21), et dans lequel les adaptateurs (21) peuvent être guidés le long d'une trajectoire prédéterminée,
une réserve de pièces à usiner (3) dans laquelle une pluralité de pièces à usiner (31) peuvent être reçues,
un second chargeur (7) dans lequel sont reçus les outils (61), directement ou via des adaptateurs d'outil (64),
un poste d'assemblage (4) sur lequel une pièce à usiner (31) respective de la réserve de pièces à usiner (3) est assemblée avec un adaptateur (21) reçu dans le chargeur d'alimentation (2), de sorte que la pièce à usiner (31) est maintenue par l'adaptateur (21), et l'adaptateur (21) avec la pièce à usiner (31) maintenue dans celui-ci est guidé plus loin dans le chargeur d'alimentation (2), et
une table d'usinage (6) avec des éléments de retenue d'outil (63) pour recevoir des outils (61) et avec des éléments de retenue de pièce à usiner (62) pour recevoir des pièces à usiner (31), dans laquelle
la broche (5) peut être déplacée en rotation et en translation pour l'usinage d'une pièce à usiner (31) et peut être déplacée contre la table d'usinage (6) de telle sorte que la pièce à usiner (31) peut être usinée, et dans laquelle
la broche (5) est conçue de telle sorte que ces pièces à usiner (31) maintenues dans le réceptacle sur la table d'usinage (6) ou dans le chargeur d'alimentation (2) peuvent être reçues par des adaptateurs (21) ou sur la table d'usinage (6) et que des seconds outils (61) maintenus dans le second chargeur (7) peuvent être reçus, directement ou au moyen d'adaptateurs d'outil (64), afin d'usiner la pièce à usiner (31).

10. Machine-outil (1) selon la revendication 9, présentant en outre :
un chargeur d'adaptateurs (66) destiné à recevoir des adaptateurs (21) et/ou des outils (64) de la broche (5), le chargeur d'adaptateurs (66) étant formé sur la table d'usinage (6).

11. Machine-outil (1) selon la revendication 9 ou 10, dans laquelle
le second chargeur (7) et le chargeur d'alimentation (2) sont conçus sous la forme d'un chargeur combiné, dans lequel les adaptateurs (21) et les outils (61) sont reçus directement ou dans des adaptateurs d'outil (64).

12. Machine-outil (1) selon l'une des revendications 9 à 11, dans laquelle
l'adaptateur d'outil (64) et l'adaptateur (21) sont conçus sous la forme d'un adaptateur combiné, dans lequel les outils (61) et les pièces à usiner (31) peuvent être maintenus pour l'usinage de la pièce à usiner (31).

13. Machine-outil (1) selon l'une quelconque des revendications 9 à 12, dans laquelle :
l'élément de retenue de pièce à usiner (62) et l'élément de retenue d'outil (63) sont agencés sur la table d'usinage (6) sous la forme d'éléments rotatifs de telle sorte que des pièces à usiner (31) et des outils (61) maintenus dans les éléments rotatifs peuvent tourner pour permettre d'usiner la pièce à usiner (31) en même temps ou à la place de la rotation de la broche (5), et dans laquelle
la table d'usinage (6), lors de l'usinage de la pièce à usiner (31), peut être ajustée dans sa position de préférence par rapport à un axe de rotation de la broche (5).

14. Machine-outil (1) selon l'une quelconque des revendications 9 à 13, dans laquelle :
la table d'usinage (6) présente une pluralité de régions sur chacune desquelles différents outils (61) pour traiter la pièce à usiner (31) peuvent être maintenus, dans laquelle la table d'usinage (6) peut être modifiée de telle sorte que des outils (61) maintenus sur une zone de la table d'usinage (6) peuvent être échangés et simultanément des outils (61) maintenus dans une autre zone dans des éléments de retenue d'outil (63) ou une pièce à usiner (31) maintenue un élément de retenue de pièce à usiner (62) peuvent être associés pendant l'usinage de la pièce à usiner, de préférence par enlèvement par copeaux.

15. Machine-outil (1) selon l'une des revendications 9 à 15, dans laquelle :
la machine-outil (1) présente un dispositif de mesure et un dispositif de commande et la broche (5) peut être déplacée dans une zone de détection du dispositif de mesure de sorte que la pièce à usiner (31) maintenue dans la broche (5) par l'adaptateur (21) puisse être mesurée concernant sa géométrie, et que les données détectées puissent être reçues par le dispositif de commande.
